(19) Europäisches Patentamt
European Patent Office
Office européen des brevets

(11) **EP 4 350 664 A1**

(12) **EUROPEAN PATENT APPLICATION**
published in accordance with Art. 153(4) EPC

(43) Date of publication:
**10.04.2024 Bulletin 2024/15**

(21) Application number: **22832097.4**

(22) Date of filing: **29.06.2022**

(51) International Patent Classification (IPC):
**G08G 1/16** (2006.01)

(52) Cooperative Patent Classification (CPC):
**G08G 1/16**

(86) International application number:
**PCT/CN2022/102225**

(87) International publication number:
**WO 2023/274284 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2021 CN 202110736911
23.11.2021 CN 202111390324**

(71) Applicant: **Huawei Technologies Co., Ltd.
Shenzhen, Guangdong 518129 (CN)**

(72) Inventor: **ZHANG, Jing
Shenzhen, Guangdong 518129 (CN)**

(74) Representative: **Gill Jennings & Every LLP
The Broadgate Tower
20 Primrose Street
London EC2A 2ES (GB)**

(54) **VEHICLE CONTROL METHOD, DEVICE AND SYSTEM**

(57) This application discloses a vehicle control method, apparatus, and system, and relates to the field of autonomous driving technologies. The method includes: obtaining a topological relationship of a road junction, where the topological relationship indicates a road associated with the road junction; determining a passing sequence position of a target vehicle at the road junction based on attribute information of the road junction, status information of the target vehicle, and the topological relationship, where the target vehicle is located on an upstream road of the road junction; and indicating, based on the passing sequence position, passing of the target vehicle at the road junction. According to the method, passage sequencing of vehicles at a road junction is performed, to help reduce conflicts between the vehicles and improve passing efficiency of the vehicles. This further helps implement orderly operations or passing by the vehicles and improve overall operation efficiency of a vehicle platoon.

```
┌──────────────────┐                          ┌──────────────┐
│ Vehicle control  │                          │Target vehicle│
│    apparatus     │                          │              │
└────────┬─────────┘                          └──────┬───────┘
         │                                           │
┌────────┴─────────────┐                             │
│ S510: Obtain a       │                             │
│ topological          │                             │
│ relationship of a    │                             │
│ road junction        │                             │
└──────────────────────┘                             │
┌──────────────────────┐                             │
│ S520: Determine a    │                             │
│ passing sequence     │                             │
│ position of the      │                             │
│ target vehicle at    │                             │
│ the road junction    │                             │
│ based on attribute   │                             │
│ information of the   │                             │
│ road junction,       │                             │
│ status information   │                             │
│ of the target        │                             │
│ vehicle, and the     │                             │
│ topological          │                             │
│ relationship         │                             │
└──────────────────────┘                             │
         │  S530: Indicate, based on the             │
         │  passing sequence position, passing       │
         │  of the target vehicle at the             │
         │  road junction                            │
         │──────────────────────────────────────────▶│
         │                            ┌───────────────┴──────┐
         │                            │ S540: Pass through   │
         │                            │ the road junction    │
         │                            │ based on an          │
         │                            │ indication of the    │
         │                            │ vehicle control      │
         │                            │ apparatus            │
         │                            └──────────────────────┘
```

FIG. 5

EP 4 350 664 A1

**Description**

This application claims priorities to Chinese Patent Application No. 202110736911.0, filed with the China National Intellectual Property Administration on June 30, 2021 and entitled "VEHICLE CONTROL METHOD, APPARATUS, AND SYSTEM", and to Chinese Patent Application No. 202111390324.7, filed with the China National Intellectual Property Administration on November 23, 2021 and entitled "VEHICLE CONTROL METHOD, APPARATUS, AND SYSTEM", which are incorporated herein by reference in their entireties.

**TECHNICAL FIELD**

Embodiments of this application relate to the field of autonomous driving technologies, and in particular, to a vehicle control method, apparatus, and system.

**BACKGROUND**

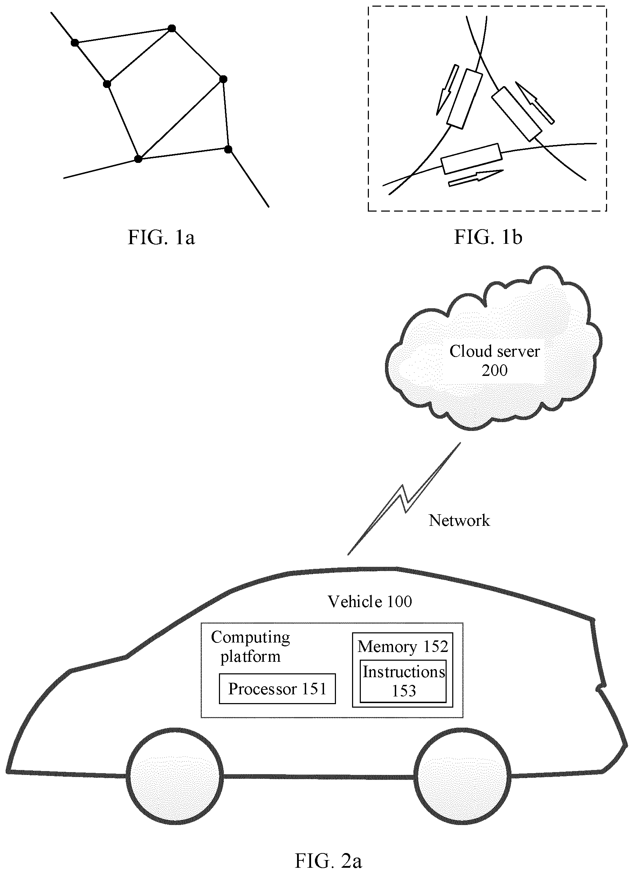

Generally, a road network structure includes several roads and road junctions (which may also be referred to as road intersections). As shown in FIG. 1a, a line segment represents a road, a dot represents a road junction, two endpoints of each road are junctions, and one junction may be an intersection of several roads.

Due to a convergence or evacuation feature of a road junction, a gridlock (that is, two or more vehicles become obstacles to each other, to trigger an obstacle avoidance and stopping mechanism, for example, a ring gridlock phenomenon in a junction shown in FIG. 1b) phenomenon or a congestion phenomenon easily occurs at the road junction. A smoothness status of the road junction determines a smoothness degree of a road network structure to a large extent.

**SUMMARY**

Embodiments of this application provide a vehicle control method, apparatus, and system, to help reduce conflicts between vehicles and improve passing efficiency of the vehicles. This further helps implement orderly operations or passing by the vehicles and improve overall operation efficiency of a vehicle platoon.

According to a first aspect, an embodiment of this application provides a vehicle control method. The method may be applied to a vehicle control apparatus. The vehicle control apparatus may be an independent device, may be a chip or a component in a device, or may be software, and may be deployed in a cloud, a road side device, a remote server, a local server, or the like. A product form and a deployment manner of the vehicle control apparatus are not limited in embodiments of this application.

The method may include: obtaining a topological relationship of a road junction, where the topological relationship indicates a road associated with the road junction; determining a passing sequence position of a target vehicle at the road junction based on attribute information of the road junction, status information of the target vehicle, and the topological relationship, where the target vehicle is located on an upstream road of the road junction; and indicating, based on the passing sequence position, passing of the target vehicle at the road junction.

According to the foregoing method, the topological relationship may indicate an association relationship between the road junction and a plurality of roads. The vehicle control apparatus may manage, with reference to the topological relationship, the status information of the target vehicle, and the attribute information of the road junction, passing, at the road junction, of the target vehicle located at the upstream road of the road junction, so that the target vehicle can travel through the road junction at appropriate time, to avoid, as much as possible, a gridlock or congestion phenomenon between the target vehicle and another vehicle at the road junction. For example, the solution may be applied to a production scenario like a port, a mine, or a closed (or semi-closed) industrial park, so that vehicles in a vehicle platoon in a corresponding site are managed and scheduled in a unified manner, and different vehicles can travel in an orderly manner through a same road junction, to reduce queue jumping and queuing waiting of some vehicles occurring when different vehicles meet at a same road junction, and reduce congestion caused by disordered movement of some vehicles. This improves overall operation efficiency of the vehicle platoon, and greatly reduces manual operation costs. The solution may also be applied to a passenger vehicle environment, for example, an expressway toll station, a garage, or a passenger station. Passing, at a same road junction, of a plurality of passenger vehicles (which are considered as belonging to one vehicle platoon) that need to queue or stop may be managed and scheduled in a unified manner, so that each passenger vehicle can perform queuing/payment, inbound, outbound, and the like in an orderly manner. This reduces long waiting time of some passenger vehicles and improves overall operation efficiency.

With reference to the first aspect, in a possible design, the method further includes: determining the target vehicle, where the target vehicle is a vehicle that is to pass through the road junction within preset time.

Vehicles that are to pass through the road junction within the preset time may simultaneously travel into the road junction. If junction passage management is not performed on these vehicles, a gridlock or congestion phenomenon may occur because these vehicles simultaneously travel into the road junction. According to the foregoing method, the vehicle control apparatus may determine, within the preset time, the target vehicle from vehicles that are to pass through the road junction, and manage the passing sequence position of the target vehicle at the road junction, to guide the target vehicle to travel through the road junction in sequence, thereby reducing gridlock or congestion phenomena that occur when a plurality of vehicles are at the road junction.

With reference to the first aspect, in a possible design, the topological relationship indicates at least one upstream road associated with the road junction. The method further includes: determining, based on the topological relationship and from a vehicle located on the at least one upstream road, at least one vehicle that is to pass through the road junction within the preset time, where the target vehicle is a vehicle in the at least one vehicle.

According to the foregoing method, the vehicle control apparatus may determine, based on the at least one upstream road indicated by the topological relationship and from vehicles that may travel to the road junction, a vehicle that is to pass through the road junction within the preset time, so that statistical omissions of to-be-passed vehicles can be reduced as much as possible, to perform comprehensive passage sequencing on all possible candidate vehicles as much as possible, and obtain a passing sequence position of each vehicle at the road junction. Further, the plurality of vehicles may be guided to travel through the road junction in an orderly manner.

With reference to the first aspect, in a possible design, the topological relationship indicates at least one downstream road associated with the road junction. The method further includes: determining a target road for the target vehicle from the at least one downstream road; and adjusting the passing sequence position of the target vehicle at the road junction based on the attribute information of the target road. For example, the attribute information of the target road includes a capacity of the target road.

With reference to the first aspect, in another possible design, the topological relationship indicates at least one downstream road associated with the road junction. The method further includes: determining a target road for the target vehicle from the at least one downstream road. The determining a passing sequence position of a target vehicle at the road junction includes: determining the passing sequence position of the target vehicle at the road junction based on the attribute information of the target road. For example, the attribute information of the target road includes the capacity of the target road.

According to the foregoing method, the vehicle control apparatus may determine or adjust the passing sequence position of the target vehicle at the road junction based on the attribute information of the downstream target road for the target vehicle, to ensure that the target vehicle can travel into the target road after passing through the road junction. The capacity of the target road junction is used as an example. After a quantity of vehicles on the target road reach an upper limit of the target capacity, the target road further cannot accommodate the target vehicle, that is, the target vehicle cannot travel into the target road through the road junction. Therefore, the vehicle control apparatus may determine a backward passing sequence position for the target vehicle or adjust the passing sequence position of the target vehicle backward, and therefore, gridlock or congestion phenomena that occur when the target vehicle cannot pass through the road junction are reduced.

With reference to the first aspect, in a possible design, the method further includes: adjusting the passing sequence position of the target vehicle at the road junction based on a task priority of the target vehicle. In another possible design, the determining a passing sequence position of a target vehicle at the road junction includes: determining the passing sequence position of the target vehicle at the road junction based on a task priority of the target vehicle.

According to the foregoing method, the vehicle control apparatus may determine or adjust the passing sequence position of the target vehicle based on task priorities of the vehicles, to ensure that a vehicle with a higher task priority can obtain a higher passage priority, to be prioritized to pass through the road junction. For example, in the passenger vehicle environment, special operation vehicles (such as engineering emergency vehicles, ambulance vehicles, and firefighting vehicles) are prioritized to pass through.

With reference to the first aspect, in a possible design, the indicating, based on the passing sequence position, passing of the target vehicle at the road junction includes: sending indication information to the target vehicle, where the indication information indicates a temporary parking space for the target vehicle before the target vehicle passes through the road junction.

According to the foregoing method, the vehicle control apparatus may further guide the target vehicle to the temporary parking space, so that when the target vehicle is temporarily incapable of travelling through the road junction, the vehicle control apparatus waits in the temporary parking space, to reduce interference caused by the target vehicle staying on an operating lane or a moving path of another vehicle, and reduce gridlock or congestion phenomena that occur when the target vehicle stays at the road junction.

Optionally, the attribute information of the road junction includes at least one of the following: a capacity, a right of way of the upstream road, and a right of way of the downstream road. The capacity may indicate an upper limit of a quantity of vehicles that can be supported to simultaneously pass through the road junction. The right of way of the upstream road and/or the right of way of the downstream road may be used for weighting of a road part when a passage priority of a vehicle is determined.

Optionally, the status information of the target vehicle includes at least one of the following: a location, a speed, and a heading angle.

The status information of the vehicle may be used by the vehicle control apparatus to determine a real-time location and a real-time status of the vehicle, to determine whether the vehicle is a vehicle that needs to travel through the road junction within the preset time. For example, the location of the vehicle may be used to match the vehicle with the road junction and upstream and downstream roads of the road junction, to determine a matching relationship between the vehicle and the road junction. When the vehicle matches the road junction, the vehicle may be used as a candidate vehicle on which the junction passage management may need to be performed at the road junction. The heading angle of the vehicle may be used to determine whether the vehicle travels in a direction toward the road junction. If the vehicle travels in the direction toward the road junction, the vehicle may be used as a candidate vehicle on which the junction passage management may need to be performed at the road junction. The speed of the vehicle may be used to determine time required for the vehicle to travel to the road junction. Shorter time indicates that the vehicle is closer to the road junction, and a sequence position in which the vehicle travels through the road junction may be prioritized. Further, the vehicle control apparatus may determine the matching relationship between the vehicle and the road junction and the passing sequence position of the vehicle at the road junction based on one or a combination of the foregoing status information reported by the vehicle. Specific implementation is described in detail below with reference to method steps. Details are not described herein.

According to a second aspect, an embodiment of this application provides a vehicle control method. The method may be applied to an entire vehicle, a vehicle-mounted device on a vehicle, a chip in a vehicle, or another component. The method includes: A target vehicle receives first indication information, where the target vehicle is located on an upstream road of a road junction, the road junction and the upstream road of the road junction are defined in a same topological relationship, and the first indication information indicates a passing sequence position of the target vehicle at the road junction. The target vehicle travels through the road junction based on the first indication information.

With reference to the second aspect, in a possible design, the target vehicle is a vehicle that is to pass through the road junction within preset time.

With reference to the second aspect, in a possible design, the road junction is associated with at least one upstream road, the target vehicle is a vehicle in at least one vehicle that is to pass through the road junction within the preset time, and the at least one vehicle is located on the at least one upstream road.

With reference to the second aspect, in a possible design, the method further includes: The target vehicle receives second indication information, where the second indication information indicates a temporary parking space for the target vehicle before the target vehicle passes through the road junction. The target vehicle travels to the temporary parking space based on the second indication information before the target vehicle passes through the road junction.

With reference to the second aspect, in a possible design, the method further includes: The target vehicle reports status information, where the status information includes at least one of the following: a location, a speed, and a heading angle.

According to a third aspect, an embodiment of this application provides a vehicle control method. The method may be applied to an entire vehicle, a vehicle-mounted device on a vehicle, a chip in a vehicle, or another component. The method includes: receiving first indication information, where the first indication information indicates a temporary parking space; controlling, based on the first indication information, a vehicle to travel to the temporary parking space; receiving second indication information, where the second indication information indicates a passing path of the vehicle at a road junction; and controlling, based on the second indication information, the vehicle to travel from the temporary parking space to pass through the road junction.

According to a fourth aspect, an embodiment of this application provides a vehicle control method. The method may be applied to an entire vehicle, a vehicle-mounted device on a vehicle, a chip in a vehicle, or another component. The method includes: receiving indication information, where the indication information indicates a passing path, and the passing path includes a temporary parking space and a road junction; and controlling, based on the indication information, a vehicle to travel through the road junction after the vehicle stops at the temporary parking space.

It should be understood that, in this embodiment of this application, the passing path may be a road-level path or a lane-level path. The road-level path may indicate that the vehicle travels on a corresponding road, mainly indicates a traveling direction at a road junction, and generally does not restrict a specific behavior of the vehicle on the road. The lane-level path may require the vehicle to travel on a specific lane, and the vehicle is not allowed to randomly overtake a vehicle, change a lane, or cross a lane.

According to a fifth aspect, an embodiment of this application provides a vehicle control apparatus. The vehicle control apparatus may be an independent device, may be a chip or a component in a device, or may be software, and may be deployed in a cloud, a road side device, a remote server, a local server, or the like. A product form and a deployment manner of the vehicle control apparatus are not limited in embodiments of this application.

The vehicle control apparatus may include: an obtaining unit, configured to obtain a topological relationship of a road junction, where the topological relationship indicates a road associated with the road junction; a determining unit, configured to determine a passing sequence position of a target vehicle at the road junction based on attribute information of the road junction, status information of the target vehicle, and the topological relationship, where the target vehicle is located on an upstream road of the road junction; and a communication unit, configured to indicate, based on the passing sequence position, passing of the target vehicle at the road junction. Optionally, the attribute information of the road junction includes at least one of the following: a capacity, a right of way of the upstream road, and a right of way of a downstream road. The status information of the target vehicle includes at least one of the following: a location, a speed, and a heading angle.

With reference to the fifth aspect, in a possible design, the determining unit is further configured to determine the target vehicle, where the target vehicle is a vehicle that is to pass through the road junction within preset time.

With reference to the fifth aspect, in a possible design, the topological relationship indicates at least one upstream road associated with the road junction. The determining unit is further configured to determine, based on the topological relationship and from a vehicle located on the at least one upstream road, at least one vehicle that is to pass through the road junction within the preset time, where the target vehicle is a vehicle in the at least one vehicle.

With reference to the fifth aspect, in a possible design, the topological relationship indicates at least one downstream road associated with the road junction. The determining unit is further configured to: determine a target road for the target vehicle from the at least one downstream road; and adjust the passing sequence position of the target vehicle at the road junction based on the attribute information of the target road.

With reference to the fifth aspect, in a possible design, the topological relationship indicates at least one downstream road associated with the road junction. The determining unit is further configured to: determine a target road for the target vehicle from the at least one downstream road. That the determining unit determines the passing sequence position of the target vehicle at the road junction includes: determining the passing sequence position of the target vehicle at the road junction based on the attribute information of the target road.

With reference to the fifth aspect, in a possible design, the apparatus further includes: an adjustment unit, configured to adjust the passing sequence position of the target vehicle at the road junction based on a task priority of the target vehicle.

With reference to the fifth aspect, in a possible design, that the determining unit determines the passing sequence position of the target vehicle at the road junction includes: determining the passing sequence position of the target vehicle at the road junction based on a task priority of the target vehicle.

With reference to the fifth aspect, in a possible design, the communication unit is configured to: send indication information to the target vehicle, where the indication information indicates a temporary parking space for the target vehicle before the target vehicle passes through the road junction.

According to a sixth aspect, an embodiment of this application provides a vehicle control apparatus. The vehicle control apparatus may be an entire vehicle, a vehicle-mounted device on a vehicle, a chip in a vehicle, or another component.

The vehicle control apparatus may include: a communication unit, configured to receive first indication information, where a vehicle is located on an upstream road of a road junction, the road junction and the upstream road of the road junction are defined in a same topological relationship, and the first indication information indicates a passing sequence position of the vehicle at the road junction; and a control unit, configured to control, based on the first indication information, the vehicle to travel through the road junction. Optionally, the target vehicle is a vehicle that is to pass through the road junction within preset time. Alternatively, the road junction is associated with at least one upstream road, the target vehicle is a vehicle in at least one vehicle that is to pass through the road junction within preset time, and the at least one vehicle is located on the at least one upstream road.

With reference to the sixth aspect, in a possible design, the communication unit is further configured to receive second indication information, where the second indication information indicates a temporary parking space for the target vehicle before the target vehicle passes through the road junction. The control unit is further configured to: before controlling the vehicle to pass through the road junction, control, based on the second indication information, the vehicle to travel to the temporary parking space.

According to a seventh aspect, an embodiment of this application provides a vehicle control apparatus. The vehicle control apparatus includes: a first communication unit, configured to receive first indication information, where the first indication information indicates a temporary parking space; a first control unit, configured to control, based on the first indication information, a vehicle to travel to the temporary parking space; a second communication unit, configured to receive second indication information, where the second indication information indicates a passing path of the vehicle at a road junction; and a second control unit, configured to control, based on the second indication information, the vehicle to travel from the temporary parking space to pass through the road junction.

According to an eighth aspect, an embodiment of this application provides a vehicle control apparatus. The vehicle control apparatus includes: a communication unit, configured to receive indication information, where the indication information indicates a passing path, and the passing path includes a temporary parking space and a road junction; and a control unit, configured to control, based on the indication information, a vehicle to travel through the road junction after the vehicle stops at the temporary parking space.

According to a ninth aspect, an embodiment of this application provides an apparatus. The apparatus includes a memory and a processor. The memory is configured to store computer instructions. The processor invokes the computer instructions stored in the memory, to implement the method according to any one of the foregoing aspects and the possible designs of any one of the foregoing aspects.

According to a tenth aspect, an embodiment of this application provides a computer-readable storage medium. The computer-readable storage medium stores a computer program. When the computer program is run on a computer, the computer is enabled to perform the method according to any one of the foregoing aspects and the possible designs of any one of the foregoing aspects.

According to an eleventh aspect, an embodiment of this application provides a computer program product. When the computer program product runs on a computer, the computer is enabled to perform the method according to any one of the foregoing aspects and the possible designs of any one of the foregoing aspects.

According to a twelfth aspect, an embodiment of this application provides a chip system. The chip system includes a processor, configured to invoke a computer program or computer instructions stored in a memory, so that the processor performs the method according to any one of the foregoing aspects and the possible designs of any one of the foregoing aspects.

With reference to the twelfth aspect, in a possible implementation, the processor is coupled to the memory through an interface.

With reference to the twelfth aspect, in a possible implementation, the chip system further includes a memory, and the memory stores a computer program or computer instructions.

According to a thirteenth aspect, an embodiment of this application provides a processor. The processor is configured to invoke a computer program or computer instructions stored in a memory, so that the processor performs the method according to any one of the aspects and the possible designs of any one of the foregoing aspects.

According to a fourteenth aspect, an embodiment of this application provides a vehicle control system. The system includes the vehicle control apparatus according to the fifth aspect and the vehicle control apparatus according to the sixth aspect, the seventh aspect, or the eighth aspect.

In embodiments of this application, based on the implementations according to the foregoing aspects, further combination may be performed to provide more implementations.

## BRIEF DESCRIPTION OF DRAWINGS

FIG. 1a is a schematic diagram of a road network structure;
FIG. 1b is a schematic diagram of a ring gridlock phenomenon;
FIG. 2a is a schematic diagram of an application scenario to which an embodiment of this application is applicable;
FIG. 2b is an architecture diagram of a system to which an embodiment of this application is applicable;
FIG. 3 is a schematic diagram of a road junction according to an embodiment of this application;
FIG. 4 is a schematic diagram of an electronic fence according to an embodiment of this application;
FIG. 5 is a schematic flowchart of a vehicle control method according to an embodiment of this application;
FIG. 6A and FIG. 6B are a schematic flowchart of a vehicle control method according to an embodiment of this application;
FIG. 7 is a schematic flowchart of a vehicle control method according to an embodiment of this application;
FIG. 8A and FIG. 8B are a schematic flowchart of a vehicle control method according to an embodiment of this application;
FIG. 9 is a schematic diagram of a structure of a vehicle control apparatus according to an embodiment of this application;
FIG. 10 is a schematic diagram of a structure of a vehicle according to an embodiment of this application; and
FIG. 11 is a schematic diagram of a structure of an apparatus according to an embodiment of this application.

## DESCRIPTION OF EMBODIMENTS

A road junction, also referred to as a road intersection, is generally a junction where two or more roads converge, and is an inevitable place for vehicles, pedestrians, and the like to gather, steer, and evacuate. Based on a moving direction of a vehicle flow, a pedestrian flow, or the like, a road in an upstream direction of a road junction may be referred to as an incoming road (incoming road), and a road in a downstream direction of the road junction may be referred to as an outcoming road (outcoming road). According to a quantity of intersected roads, junctions may be classified into a three-way junction, a four-way junction, a multi-way junction, and the like. Based on how to intersect, junctions may be classified into an at-grade intersection, a grade-separated intersection, and the like. Generally, one road may include one or more lanes. The lane, also referred to as a driving line or a carriageway, is a road used by a vehicle to pass through, and may be a one-way lane or a multi-way lane.

In urban traffic, traffic lights are generally set at road junctions, to ensure traffic safety and smoothness. Phase control of traffic lights can be used to implement orderly passing of vehicles in all directions. In busy hours, dedicated personnel are usually assigned to guide passage at road junctions. In small-scale road junctions without traffic lights, multi-vehicle passage is generally implemented based on autonomous behavior of drivers. When dedicated personnel are required to participate in command and guidance, large labor costs are inevitably caused, and a potential traffic risk may further cause a personal safety crisis. However, a driver generally can only control driving behavior of a vehicle of the driver, but cannot control behavior of another vehicle. Although junction passing can be completed through communication between drivers, in a complex scenario (for example, a large quantity of vehicles gather), communication efficiency is low, and a gridlock or congestion phenomenon cannot be avoided.

In a production environment of commercial vehicles, traffic lights are not deployed at many road junctions to maximize production efficiency, and dedicated personnel at junctions are not likely to be arranged, to ensure operation safety and reduce costs. If a vehicle is manually driven, the vehicle can still pass through the road junction through communication between drivers. However, this manner is inefficient and is not conducive to improving production efficiency of an entire system. In an autonomous driving scenario based on vehicle autonomous driving, a vehicle game is used to implement passing through a road junction. Due to lack of a unified decision-making brain, limited information obtained by each vehicle, and interference to vehicle sensing elements, it is difficult for a vehicle to make decisions that help improve operation efficiency. In addition, gridlock may occur, causing the entire system to stop working. This greatly affects operation efficiency of the system.

Unified scheduling, planning, and guidance of vehicles in a target zone based on a cloud are provided, namely, vehicle-cloud cooperative driving, to resolve the foregoing problem. This solution can be applied to some port scenarios to achieve efficient operations at docks. However, in this solution, the cloud is only used to deliver a task (for example, including destination information) and some basic instructions (for example, parking, task suspension, and task resumption) to the vehicle, which is a weak control mode. In this mode, the cloud does not need to have a path planning capability, or needs to have only a simple path planning capability (where, generally, presetting is required). In addition, a driving path is recorded at the vehicle by driving in a site for a plurality of times, and then a corresponding path is invoked from a vehicle database based on the task delivered by the cloud, and driving is performed along the path. In this solution, implementation of an autonomous driving function almost completely depends on the vehicle, and the cloud does not really play a role of multi-vehicle cooperative control. When a plurality of vehicles need to pass through a same road junction, a conflict between the vehicles cannot be avoided, and a phenomenon like gridlock or congestion in a local zone is easily caused, resulting in low operation efficiency of the entire system. In addition, in this solution, a vehicle needs to record a driving path and travel along a saved driving path. This is dependent on an operation site, and the operation site cannot be flexibly changed and extended. Therefore, scalability of the solution is poor.

Embodiments of this application provide a vehicle control method, apparatus, and system. The vehicle control apparatus determines a passing sequence position of a target vehicle at a road junction based on a topological relationship, attribute information of the road junction, status information of the target vehicle, and the like, and indicates, based on the passing sequence position, passing of the target vehicle at the road junction, so that the target vehicle can travel through the road junction at an appropriate occasion, gridlock or congestion phenomena occurring when a plurality of vehicles meet at the road junction is reduced as much as possible. The solution may be applied to a production scenario like a port, a mine, or a closed (or semi-closed) industrial park, so that vehicles in a vehicle platoon in a corresponding site are managed and scheduled in a unified manner, and different vehicles can travel in an orderly manner through a same road junction, to reduce queue jumping and queuing waiting of some vehicles occurring when different vehicles meet at a same road junction, and reduce congestion caused by disordered movement of some vehicles. This improves overall operation efficiency of the vehicle platoon, and greatly reduces manual operation costs. The solution may also be applied to a passenger vehicle environment, for example, an expressway toll station, a garage, or a passenger station. Passing, at a same road junction, of a plurality of passenger vehicles (which are considered as belonging to one vehicle platoon) that need to queue or stop may be managed and scheduled in a unified manner, so that each passenger vehicle can perform queuing/payment, inbound, outbound, and the like in an orderly manner. This reduces long waiting time of some passenger vehicles and improves overall operation efficiency.

Further, according to this solution, vehicle passage management at a plurality of road junctions in a road network structure can be further implemented, so that vehicles are evenly distributed in the entire road network structure. This implements efficient running of the entire system. The method and the apparatus are conceived based on a same technical concept. The method and the apparatus have similar principles for resolving problems. Therefore, for implementations of the apparatus and the method, refer to each other. Details are not repeatedly described.

It should be noted that the vehicle control solution in embodiments of this application may be applied to the Internet of vehicles, for example, vehicle to everything (vehicle to everything, V2X), long term evolution-vehicle (long term evolution-vehicle, LTE-V), and vehicle to vehicle (vehicle to vehicle, V2V). For example, the vehicle control solution may be applied to a vehicle having a driving movement function, or another apparatus having a driving movement function in a vehicle. The another apparatus includes but is not limited to another sensor like a vehicle-mounted terminal, a vehicle-mounted controller, a vehicle-mounted module, a vehicle-mounted assembly, a vehicle-mounted component, a vehicle-mounted chip, a vehicle-mounted unit, a vehicle-mounted radar, or a vehicle-mounted camera. The vehicle may implement the vehicle control method provided in embodiments of this application by using the vehicle-mounted terminal, the vehicle-mounted controller, the vehicle-mounted module, the vehicle-mounted assembly, the vehicle-mounted component, the vehicle-mounted chip, the vehicle-mounted unit, the vehicle-mounted radar, or the vehicle-mounted camera. Certainly, the control solution in embodiments of this application may be further applied to another intelligent terminal that has a movement control function other than a vehicle, or disposed in another intelligent terminal that has a movement control function other than a vehicle, or disposed in a component of the intelligent terminal. The intelligent terminal may be an intelligent transportation device, a smart home device, a robot, or the like. For example, the intelligent terminal includes but is not limited to an intelligent terminal or another sensor like a controller, a chip, a radar, or a camera in an intelligent terminal, and another component.

It should be noted that, in embodiments of this application, "at least one" means one or more, and "a plurality of" means two or more. The term "and/or" describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, unless otherwise specified, ordinal numbers such as "first" and "second" mentioned in embodiments of this application are used to distinguish between a plurality of objects, but are not used to limit priorities, or importance of the plurality of objects. For example, a first parking space, a second parking space, and a third parking space are merely used to distinguish between different parking spaces, but do not indicate different priorities, importance, or the like of the three parking spaces.

For ease of understanding, the following provides descriptions with reference to the accompanying drawings and embodiments.

FIG. 2a is a schematic diagram of an application scenario to which an embodiment of this application is applicable. In this application scenario, a vehicle 100 and a cloud service system 200 may be included, and the vehicle 100 and the cloud service system 200 may communicate with each other through a network.

Some or all functions of the vehicle 100 are controlled by a computing platform 150. The computing platform 150 may include at least one processor 151, and the processor 151 may execute instructions 153 stored in a non-transitory computer-readable medium like a memory 152. In some embodiments, the computing platform 150 may alternatively be a plurality of computing devices that control individual components or subsystems of the vehicle 100 in a distributed manner. The processor 151 may be any conventional processor, like a central processing unit (central processing unit, CPU). Alternatively, the processor 151 may further include a graphics processing unit (graphics processing unit, GPU), a field programmable gate array (field programmable gate array, FPGA), a system on chip (system on chip, SOC), an application-specific integrated chip (application-specific integrated circuit, ASIC), or a combination thereof.

In addition to the instructions 153, the memory 152 may further store data, such as a road map, route information, and a location, a direction, a speed, and other such vehicle data of the vehicle, and other information. This information may be used by the vehicle 100 and the computing platform 150 during an operation of the vehicle 100 in autonomous, semi-autonomous, and/or manual modes.

It should be understood that a structure of the vehicle in FIG. 2a should not be understood as a limitation on embodiments of this application.

Optionally, the vehicle 100 may be a car, a truck, a motorcycle, a bus, a boat, an airplane, a helicopter, a lawn mower, a recreational vehicle, a playground vehicle, a construction device, a trolley, a golf cart, a train, or the like. This is not specifically limited in embodiments of this application.

In addition, a cloud server may be further included in the application scenario shown in FIG. 2a. In an embodiment of this application, the cloud server manages, with reference to a topological relationship, status information of a target vehicle, and attribute information of a road junction, passing, at the road junction, of the target vehicle on an upstream road at the road junction, so that the target vehicle can travel through the road junction at appropriate time, to avoid, as much as possible, a gridlock or congestion phenomenon between the target vehicle and another vehicle at the road junction, thereby helping avoid a conflict between vehicles.

In an embodiment, the cloud server may alternatively be implemented by using a virtual machine.

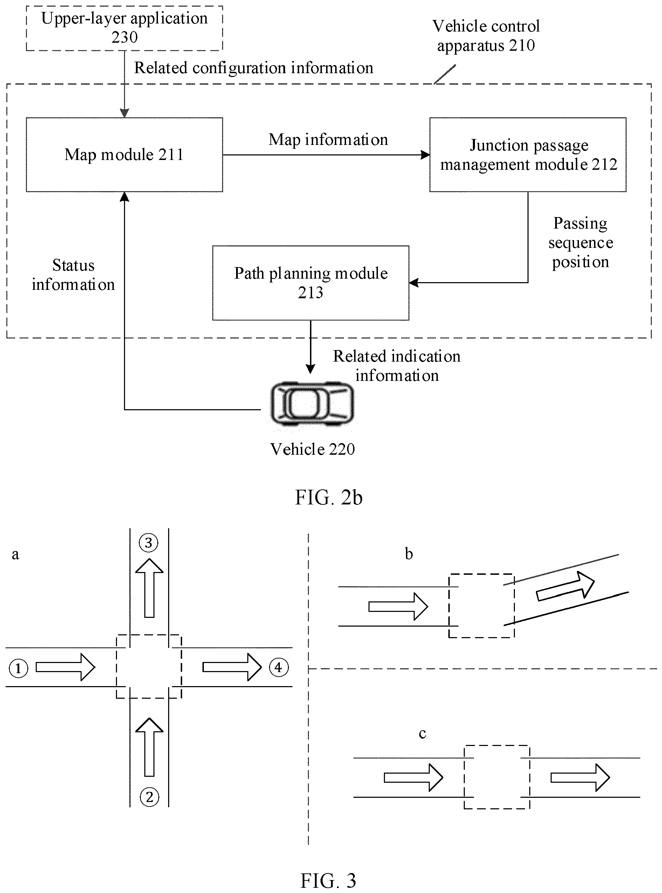

FIG. 2b is an architecture diagram of a system to which an embodiment of this application is applicable. Refer to FIG. 2b. The system may include a vehicle control apparatus 210 and a vehicle 220. It should be understood that only an example of an apparatus that may be included in the system is described herein instead of any limitation. Optionally, the system may further include an upper-layer application 230, a road side unit (road side unit, RSU), and the like. In addition, quantities of various apparatuses that may be included in the system are not limited to one. For example, the system may include at least one vehicle 220.

The vehicle control apparatus 210 may be configured to provide a related service/function for controlling the vehicle 220, including but not limited to a map service, a junction passage management service, a path planning service, and the like. In a possible implementation, the foregoing services may also be implemented by a corresponding module in the vehicle control apparatus 210. For example, a map module 211 provides the map service, a junction passage management module 212 provides the junction passage management service, and a path planning module 213 provides the path planning service. It should be understood that the map module 211, the parking space resource management module 212, and the path planning module 213 described herein may be different modules, or may be two modules, or may be one module, or some module functions may be deployed in an upper-layer application or another system. This embodiment of this application imposes no limitation on services provided by the vehicle control apparatus 210 and specific implementations of the services.

For example, that a map module 211 provides the map service may be providing map information required for performing driving control on the vehicle 120 in a specified target zone, including but not limited to road information, road junction information, other related information, and the like in the target zone. That a junction passage management module 212 provides the junction passage management service may be performing junction passage scheduling on the vehicle 220. An appropriate passing sequence position is planned for the vehicle 220, so that the vehicle 220 can pass in an orderly manner at a corresponding road junction in the target zone. That a path planning module 213 provides the path planning service may be performing path planning for the vehicle, planning a running route of the vehicle in the target zone, and sending indication information to the vehicle, so that the vehicle 220 can move in an orderly manner based on an obtained path. Therefore, under cooperative control of the modules, when a plurality of vehicles need to pass through a same road junction, the vehicle control apparatus may flexibly plan and adjust a passing sequence of the plurality of vehicles at the road junction, to reduce phenomena such as gridlock or congestion that occur when the vehicles are at the road junction, and ensure, as much as possible, even passing through the road junctions of the road network structure.

Modules in the vehicle control apparatus may communicate with each other and transmit information to each other, to ensure implementation of related functions of the vehicle control apparatus. For example, the junction passage management module 212 may query vehicle information, the road junction information, the topological relationship, and other related configuration information in the target zone from the map module, and perform, based on the queried information, unified management and scheduling on a plurality of vehicles that need to pass through a same road junction, to obtain a passing sequence of the plurality of vehicles at the road junction. The path planning module 213 may query the junction passage management module for the passing sequence of the plurality of vehicles, and perform path planning for the plurality of vehicles based on the passing sequence, to obtain a to-be-run path for each vehicle. It should be noted that, in FIG. 2b, a connection line between the map module 211, the junction passage management module 212, and the path planning module 213 only indicates that information is exchanged between these modules, and does not limit a communication manner, an information transmission direction, and specific information transmitted between different modules.

During specific implementation, the vehicle control apparatus 210 may be presented in a plurality of different product forms. For example, the vehicle control apparatus may be a server. The server may be a single server, or may be a server cluster including a plurality of servers. The server may be a local server. In the Internet of vehicles field, the server may be specifically a cloud server, or may be referred to as a cloud, a cloud server, a cloud controller, an Internet of vehicles server, or the like. The cloud server is a general term for devices or components having a data processing capability, for example, may include a physical device like a host or a processor, may include a virtual device like a virtual machine or a container, or may include a chip or an integrated circuit. Optionally, the vehicle control apparatus 210 may be a road side unit, or a chip or a component in a road side unit.

The vehicle 220 may be any vehicle, including but not limited to a production vehicle, a vehicle of a common work type, a vehicle of a special work type, and the like, and may be a passenger vehicle, a truck, or the like. The vehicle 220 may be registered with the vehicle control apparatus 210, so as to obtain the foregoing services provided by the vehicle control apparatus 210. The services provided by the vehicle control apparatus 210 for the vehicle 220 may be presented on the vehicle 220 in a plurality of forms. For example, the service may be a voice service, a navigation service, an autonomous driving service, a query service, or a voice broadcast service. This is not limited in embodiments of this application. The vehicle 220 may further report related information, for example, status information of the vehicle, to the vehicle control apparatus 210, so that the vehicle control apparatus 210 can perform unified management and scheduling on a plurality of vehicles based on the status information reported by the vehicle 120.

The vehicle 220 may be a vehicle in a fully manual driving mode, or a vehicle in a fully autonomous driving mode, or the vehicle 220 may be a vehicle configured to be in a partially autonomous driving mode. That the vehicle is in the partially autonomous driving mode, for example, means that the vehicle 220 may control the vehicle 120 when in the autonomous driving mode, and may determine current states of the vehicle and an ambient environment by using a manual operation, determine a possible behavior of at least one other vehicle in the ambient environment, and control the vehicle 220 based on determined information. When the vehicle 220 is in the fully autonomous driving mode, the vehicle 220 may be set to operate without interacting with a person. It should be understood that when the foregoing system includes at least one vehicle, the at least one vehicle may include vehicles of different vehicle types, vehicles of different operation types, vehicles of different task priorities, or vehicles in different driving modes. In other words, the system may specifically include a plurality of different vehicles. This is not limited in embodiments of this application.

Optionally, a vehicle-mounted device configured to perform information processing and information exchange, for example, a vehicle-mounted telematics box (telematics box, T-Box), may be further placed or installed on the vehicle 220, and the T-Box may communicate with the RSU. Alternatively, if various terminal devices described below are located on a vehicle (for example, placed in the vehicle or installed in the vehicle), the terminal devices may be considered as vehicle-mounted devices, and the vehicle-mounted devices may also be considered as on board units (on board units, OBUs).

Optionally, the vehicle control apparatus 210 may be upward connected to the upper-layer application 230. For example, the upper-layer application may be an application or software. The upper-layer application 230 may be installed and run on user equipment (which may be a cloud device or a terminal device). An operator may configure the vehicle control apparatus 210 by using the upper-layer application 230, including but not limited to configuring a function of the vehicle control apparatus 210, delivering a task, delivering a control instruction, and the like. Further, the vehicle control apparatus 210 may perform unified junction passage management on related vehicles in the system based on related configuration information, a task, control instructions, and the like that are obtained from the upper-layer application 230, and by using other information that can be obtained by the vehicle control apparatus 210, to reduce occurrence of a local gridlock or congestion phenomenon in the road network structure.

It may be understood that the user equipment may be any suitable electronic device, including but not limited to a mobile phone, a tablet computer, a desktop computer, a wearable device, or the like. The user equipment may have a user interface (user interface, UI), and may be configured to display the map information, the road junction information, and the topological relationship in the target zone, a vehicle in a map, and the like. The user interface may be a touchscreen, and the operator may implement the foregoing related configuration by performing a touch operation on the user interface. Alternatively, the user equipment may further have another input apparatus, like a mouse or a keyboard. By using these input apparatuses, the operator may perform configuration, task delivery, and the like on the vehicle control apparatus by using the upper-layer application.

For ease of understanding, before the vehicle control method in this application is described, a predefined topological relationship, attribute information of a road junction, and information exchanged between function modules in FIG. 2b in this application are first explained and described.

1. Define a road junction (Junction)

In embodiments of this application, one road junction is a junction where one or more roads converge and diverge. Roads associated with a road junction may be classified into an incoming road (incoming Road) or an outcoming road (outcoming Road) based on a vehicle flow direction or a pedestrian flow direction on a road. The incoming road may also be referred to as an upstream road of the road junction, and the outcoming road may also be referred to as a downstream road of the road junction.

In the vehicle control solution in embodiments of this application, in addition to road convergence or road divergence at a road junction, driving behavior of different vehicles at the road junction need to be concerned, for example, direct passing and temporary parking. Therefore, in embodiments of this application, a quantity of upstream/downstream roads at any road junction is not limited, and a quantity of upstream roads or a quantity of downstream roads at a road junction may be greater than or equal to 1, or may be 0. For example, one road junction may be associated with only an upstream road, or may be associated with only a downstream road, or may be associated with only one upstream road and one downstream road. Alternatively, one road junction may be associated with one upstream road and at least two downstream roads. Alternatively, one road junction may be associated with at least two upstream roads and one downstream road. Details are not described herein.

In different scenarios, requirements for a road junction are different. Therefore, the road junction may be further predefined based on a scenario requirement, a map of a target zone, and/or the like, to determine a location in the target zone that may be defined as a road junction, and information that may be used for junction passage management.

(1) Determine a type and a location of a road junction

FIG. 3 shows three examples of road junctions.

As shown in FIG. 3, in a case a, there is a common cross junction at a dashed box. The cross junction may have two upstream roads and two downstream roads, which are represented as upstream roads ① and ② and downstream roads ③ and ④. Based on a vehicle flow direction, a vehicle from the upstream road ① ② may travel through the cross junction to the downstream road ③/④. On the contrary, without violating a traffic rule, the roads ③ and ④ may be used as upstream roads, the roads ① and ② may be used as downstream roads, and a vehicle from the road ③ (④) may travel through the cross junction to the road ①/②. Similarly, in the case a, a quantity of upstream roads or a quantity of downstream roads may be changed, and road junctions of more cross types are defined in an extensible manner. Details are not described herein again.

In a case b, there is a junction located at a road turning corner at a dashed box. When a road turning corner is large, it is difficult for a vehicle (for example, a vehicle with a large size and poor mobility performance) to still travel along an initial lane at the turning corner, resulting in a frequent vehicle lane change at the turning corner. Therefore, the turning corner may be set as a road junction, to facilitate passage management of a vehicle that needs to travel through the turning corner.

In a case c, there is a part of a straight-through road at a dashed box, and the part may be used by a vehicle to change a lane, or may be considered as a road junction. This type of road junction is usually used in some specific scenarios, for example, in a commercial production environment. Due to a production requirement, a part of a straight-through road is used as a part specially for a vehicle to change a lane, so that when the vehicle travels to the junction, the vehicle may change a lane.

In an actual application, junction requirement information may be used to describe various required road junctions, for example, road junctions shown in the case a to the case c in FIG. 3. The junction requirement information may be provided by an operator based on a production requirement. The junction requirement information may be described in a natural language, a machine language that can be understood by a machine and a program, or another appropriate language. This is not limited in embodiments of this application.

A vehicle control apparatus may traverse a map of a target zone based on the junction requirement information, and determine, on the map, a location suitable for being a road junction required in this application. Any road junction may be a road junction that actually exists in the physical world, or may be a road junction generated based on a production requirement. When the production requirement changes, the generated road junction may be different.

It should be understood that the three cases in FIG. 3 are merely examples for describing, but not limitations on, a road junction to which embodiments of this application are applicable. In another embodiment, another type of road junction may be defined with reference to an actual production requirement, a site, or the like. A manner of determining a type and a location of a required road junction is not limited in embodiments of this application.

(2) Define a topological relationship and attribute information of each road junction

In embodiments of this application, based on a determined road junction in a target zone, a topological relationship may be further defined based on a map of the target zone. The topological relationship indicates a road associated with each road junction in the target zone, including an upstream road and/or a downstream road.

In addition, to facilitate vehicle passage management at each road junction, each determined road junction may be further defined, to configure attribute information (as shown in the following Table 1) of each road junction, so that the vehicle passage management at the road junction is performed based on the attribute information of the road junction.

It may be understood that, in an implementation, the topological relationship may be presented as the road network structure diagram shown in FIG. 1a, including an identifier of each road junction in the target zone, and an identifier of an upstream road and/or an identifier of a downstream road associated with the road junction. In another implementation, the attribute information of each road junction may include an identifier of the road junction, and an identifier set of the upstream road and/or an identifier set of the downstream road associated with the road junction. The topological relationship may be obtained based on the identifier of the road junction, the identifier set of the upstream road, and/or the identifier set of the downstream road. The topological relationship determines vehicles that participate in junction passage management, and the vehicles can be changed based on the job task. For example, in a port scenario, a connection road and a junction of a quay crane zone and a container yard zone change with a docking location of a ship. When the docking location of the ship changes, the road is updated based on a specific docking location of the ship. In one case, the topological relationship is determined before an operation and does not change in an actual operation environment. In another case, when a road or lane cannot meet a passing condition temporarily, for example, a vehicle on the road or lane is faulty or congested, or the road or lane is faulty and needs to be shut down, the road or lane is deleted from the topological relationship, and the original topological relationship is dynamically updated again, to obtain a new topological relationship. In still another case, the topological relationship may be updated based on a task status. For example, when a task quantity decreases, the topological relationship may be updated based on an actual task requirement to release a parking space resource. Alternatively, when a task type changes, a parking space resource is preferentially occupied by a high-priority task type. In other words, a parking space resource owned by a low-priority task type is released, and the topological relationship is updated to meet the high-priority task type. Alternatively, the update may be performed in a unit of time, for example, the update is performed periodically by day, or the update is performed by week. This is not limited in embodiments of this application.

**Table 1**

| Name | Type | Definition | Remarks |
|---|---|---|---|
| id | Integer | Unique identifier of an entire map | Primary key id |
| map_id | String | Map id, which is used to distinguish a plurality of maps | Map switching |
| description | String | Junction description | Non-navigation attribute bearing |
| incoming_roadIds | List<Integer> | Upstream road ID set | Vehicle-road matching |
| outcoming_roadIds | List<Integer> | Downstream road ID set | Vehicle-road matching or starting at a corner |
| match_fence | List<MapPoint> | Electronic fence for matching | Vehicle-road matching or junction management determining |
| status | Enum | Availability status of a junction, which is available by default | 1. OPEN: open; 2. CLOSE: close |
| capacity | Integer | Capacity, which is a quantity of vehicles that can be supported to pass at the same time | Junction passage management, which can be dynamically configured |
| incoming_road_rights | Map<Integer, Double> | Right of way of an upstream road, which indicates weighting of a road part during priority determining | Junction passage management, which can be dynamically configured |
| outcoming_road_rights | Map<Integer, Double> | Right of way of a downstream road | Junction passage management, which can be dynamically configured |
| zone_id | Integer | Zone ID | Zone-based path searching |
| barrier | List<List<MapPoint>> | Physical barrier | |

As shown in Table 1, the first column shows an example of names of related attributes defined for a road junction, including an identifier (id) of the road junction, an identifier (map_id) of a map to which the road junction belongs, a road junction description (description), an identifier set of an upstream road (incoming_roadIds), an identifier set of a downstream road (outcoming_roadIds), an electronic fence for matching (match_fence), a status (status) of the road junction, a capacity (capacity), a right of way of the upstream road (incoming_road_rights), a right of way of the downstream road (outcoming_road_rights), a zone identifier (zone_id), a barrier (barrier), and the like. Correspondingly, the second column to the fourth column are definition information of corresponding attributes, including attribute types, for example, an integer (Integer) type, a string (String) type, an enumeration (Enum) type, a double-precision floating point (Double) type, a map point (MapPoint) type, and a data set type (for example, List<Integer>, List<MapPoint>, Map<Integer,Double>, and List<List<MapPoint>>); definition of the attributes, for example, a related identifier, upstream and downstream road identification information, a status, a capacity, and a right of way; and other related information described in the remarks, where for details, refer to Table 1 and corresponding explanations below. It should be understood that the attribute of the road junction is merely an example for description herein and is not any limitation. During specific implementation, another attribute of the road junction may be further defined based on a generation requirement, a scenario status of the target zone, and the like. This is not limited in embodiments of this application.

An id field and/or a map_id field may be used to uniquely identify a road junction. The id field is used to carry a primary key identifier of a road junction, and the map_id is used to carry identification information of different maps. When the different maps are switched, information in the id field may be combined with information in the map_id field to distinguish road junctions in the different maps.

A Description field may be used to carry information for describing a bearer attribute of a road junction, for example, whether the road junction is a navigation attribute bearer or a non-navigation attribute bearer. During specific implementation, different road junctions corresponding to a same location in the target zone may have different bearer attributes based on different generation requirements.

An incoming_roadIds field may be used to carry an identifier set of at least one upstream road of a road junction. The identifier set of the upstream road may be used to determine a matching relationship between a vehicle and the road junction during vehicle-road matching. For example, if a vehicle is located on an upstream road of a road junction, there may be a matching relationship between the vehicle and the road junction.

An outcoming_roadIds field may be used to carry an identifier set of at least one downstream road of a road junction. The identifier set of the downstream road may be used to determine a matching relationship between a vehicle and the road junction in a scenario like vehicle-road matching or starting at a corner. For example, if a target path of a vehicle includes a downstream road of a road junction, there may be a matching relationship between the vehicle and the road junction.

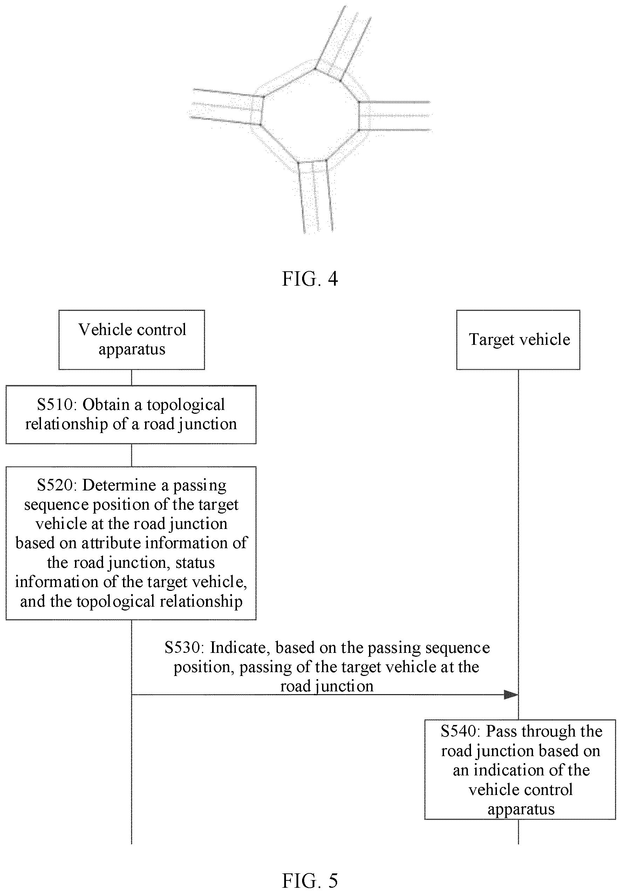

A match_fence field is used to carry information about an electronic fence of a road junction. The electronic fence (as shown in FIG. 4) may be used to more accurately determine a matching relationship between a vehicle and the road junction during vehicle-to-road matching, and/or determine whether the vehicle is closer to the road junction.

A status field may be used to carry a status of a road junction, and indicates whether the road junction is available, that is, whether a vehicle can be supported to pass or change a lane here. Generally, all road junctions in embodiments of this application may be in an available state by default. In an embodiment, a status of a road junction may be dynamically configured. For example, an available road junction is configured as unavailable, that is, changes from "open" to "close".

A capacity field may be used to carry capacity information of a road junction, namely, a quantity of vehicles that may be supported to pass through the road junction at the same time. Generally, if there is a single lane at the road junction (for example, as shown in the case a to the case c in FIG. 3), a capacity of the road junction is 1, that is, only one vehicle may be supported to pass at the same time. If two or more lanes are interleaved at the road junction, based on an interleaving status, two or more vehicles may be supported to pass through the road junction at the same time, and the capacity of the road junction may be greater than or equal to 1. Optionally, if two or more lanes are interleaved at the road junction, two or more vehicles may be supported to pass at the same time, but it is specified that only one vehicle can pass through the road junction, the capacity may also be configured as 1. To be specific, information carried in the capacity field may be defined and dynamically configured based on a requirement of the road junction. It can be learned that the foregoing capacity may be dynamically configured, for example, may be dynamically changed based on a requirement of a job task, or may be dynamically configured based on operation experience of an operator. The capacity is related to at least one of a length of a road, a quantity of lanes, a travelling distance between vehicles, a cooperative driving capability, an operating environment of a vehicle, and a job task requirement. The cooperative driving capability includes a capability of a server to schedule a vehicle platoon, performance of a vehicle in the vehicle platoon, and/or the like. For example, in a same operation scenario, in a sunny day, a travelling distance between vehicles may be less than a travelling distance between vehicles in a foggy day. Therefore, a road capacity configured in the sunny day is greater than a road capacity configured in the foggy day. In an implementation, when vehicle data of a downstream road of a junction reaches an upper limit of a capacity of the downstream road, a vehicle on another road associated with the downstream road of the junction is controlled, and the vehicle on the another road is suspended from travelling into the downstream road of the junction. In this way, congestion can be alleviated, and efficiency can be improved. It may be understood that the capacity may further include a capacity of a downstream road.

An incoming_road_rights field may be used to carry a right of way of an upstream road of a road junction (or represented as an upstream road passage priority). The right of way of the upstream road may be used as an evaluation parameter for evaluating a passing sequence position, at the road junction, of a vehicle on an upstream road. The right of way of the upstream road may be dynamically configured based on an actual situation of the road junction and an upstream road of the road junction and a production requirement. In an example, a right of way of at least one upstream road of the road junction may have a same value. In another example, a right of way of at least one upstream road of the road junction may a different value. Generally, a right of way of an important road (for example, an emergency lane, a fire lane, or a main production road) may be greater than a right of way of a common road. It may be understood that a parameter of a right of way carried by a road junction describes importance of a road. During road passage management at the junction, a vehicle that travels from a road with a high right of way to the junction and/or a vehicle that travels out of the junction and then travels into a road with a high right of way preferentially pass/passes. The foregoing right of way may be dynamically configured based on importance of a job task type, or may be dynamically configured by an operator based on experience of the operator. An outcoming_road_rights field may be used to carry a right of way of a downstream road of a road junction (or represented as a downstream road passage priority). The right of way of the downstream road may be used as an evaluation parameter for determining a passing sequence position, at the road junction, of a vehicle heading to a downstream road. The right of way of the downstream road may be dynamically configured based on an actual situation of the road junction and a downstream road of the road junction and a production requirement. In an example, a right of way of at least one downstream road of the road junction may have a same value. In another example, a right of way of at least one downstream road of the road junction may a different value. Generally, a right of way of an important road (for example, an emergency lane, a fire lane, or a main production road) may be greater than a right of way of a common road.

A zone_id field may be used to carry an identifier of a zone to which a road junction belongs. This field may be used to determine whether the road junction is in a searched path during zone-based path searching.

A barrier field may be used to carry barrier information of a road junction. The information may be actually marked barrier information in the physical world, and may be used to limit a range of the road junction. The information may also be barrier information that needs to be logically marked based on a requirement, and may be used to virtually limit a range of the road junction. When controlling passing of vehicles at the road junction, the vehicle control apparatus may further send the barrier information to the vehicles, to help reduce traffic accidents that occur on the vehicles at the road junction.

It should be noted that the attribute information of the road junction and a function of each piece of attribute information are merely examples for description. When a production requirement changes, other attribute information may be further configured and a function of corresponding attribute information may be further defined based on the changed production requirement. This is not limited in embodiments of this application. Details are not described herein again.

Based on one or more pieces of attribute information shown in Table 1, the vehicle control apparatus may perform passage management on a plurality of vehicles that need to travel through a same road junction. If the vehicles can currently directly pass through the road junction, the vehicle control apparatus may indicate, based on a determined passing sequence of the vehicles, the vehicles to travel through the road junction in sequence. If the vehicles currently cannot directly pass through the road junction, the vehicle control apparatus may further plan temporary parking spaces for the vehicles, so that the vehicles first travel to the temporary parking spaces and wait. When the vehicles can directly pass through the road junction, the vehicle control apparatus may indicate the vehicles to travel through the road junction.

In this way, all vehicles can pass through the road junction in sequence, thereby reducing queuing waiting of the vehicles at the road junction, helping ensure smoothness of a local zone in a road network structure, and reducing gridlock or congestion phenomena that occur when a plurality of vehicles are at the road junction. This solution may be applicable to passage management at a plurality of road junctions in a target zone, helping evenly distribute vehicles in the road network structure and ensuring smooth traffic in the entire road network structure.

2. Set passage rule information of a road junction

In embodiments of this application, rule information of the road junction may be used by the vehicle control apparatus to determine a passing sequence of a plurality of vehicles at the road junction. The rule information of the road junction may be set by an upper-layer application on the vehicle control apparatus, or may be obtained by the vehicle control apparatus from another device.

In an example, the passage rule information of the road junction may include at least one evaluation parameter that is used to evaluate a passing sequence position of a vehicle and a weight of the evaluation parameter, for example, a task priority p and a task priority weight $k_p$; time t that is required for the vehicle to travel from a current location to the road junction and a time weight $k_t$; a right of way of an upstream road $r_{in}$, a right of way of a downstream road $r_{out}$, and a right of way weight $k_r$; and a capacity c of a downstream target road and a capacity weight $k_c$ of the downstream target road of the vehicle. Alternatively, the passage rule information of the road junction may include a mathematical expression used to evaluate a passing sequence position of a vehicle, for example, the following expressions (1), (2), (3), (4), (5), and (6).

$$s = -k_t \times t \tag{1}$$

$$s = k_r \times (r_{in} + r_{out}) \tag{2}$$

$$s = -k_t \times t + k_r \times (r_{in} + r_{out}) \tag{3}$$

$$s = -k_t \times t + k_r \times (r_{in} + r_{out}) + k_p \times p \tag{4}$$

$$s = -k_t \times t + k_r \times (r_{in} + r_{out}) + k_c \times c \qquad (5)$$

$$s = -k_t \times t + k_r \times (r_{in} + r_{out}) + k_p \times p + k_c \times c \qquad (6)$$

The time t is a time difference. In different cases, the time t may be calculated in different manners. For example, at a current calculation moment, if the vehicle travels on an upstream road of the road junction, the time t is a difference between a predicted moment at which the vehicle travels to the road junction and the current calculation moment. Alternatively, at a current calculation moment, if the vehicle travels on an upstream road of the road junction, and the vehicle needs to travel to a corresponding temporary parking space before traveling through the road junction, the time t is a difference between a predicted moment at which the vehicle travels to the road junction (where the moment is counted into stay duration of the vehicle in the temporary parking space during prediction) and the current calculation moment, where the vehicle first travels to the temporary parking space and then travels from the temporary parking space to the road junction. Alternatively, at a current calculation moment, if the vehicle has traveled to a corresponding temporary parking space, the time t is a difference between a moment at which the vehicle travels to the temporary parking space (where the moment is real time) and the current calculation moment and stay duration of the vehicle in the temporary parking space. Based on a calculation result, a value of t may be a positive value or a negative value. A smaller absolute value of t and a larger value of s indicate that the vehicle more needs to preferentially pass through the road junction.

The foregoing road capacity c of the downstream target may be a preconfigured maximum value of vehicles that are allowed to travel into the target road. A larger value of c indicates a larger s, and a passing sequence position of a corresponding vehicle is higher. Optionally, in another example, the capacity c of the downstream target road in the foregoing expressions may be replaced with a quantity c' of vehicles currently accommodated by the downstream target road. Correspondingly, the capacity weight $k_c$ of the downstream target road may be replaced with a weight $k_{c'}$ corresponding to c'. A smaller c' and a larger s indicate a higher passing sequence position of a corresponding vehicle. Optionally, in another example, the capacity c of the downstream target road in the foregoing expressions may be replaced with a quantity c" of vehicles that can be further accommodated by the downstream target road (c"=c-c'). Correspondingly, the capacity weight $k_c$ of the downstream target road may be replaced with a weight $k_{c''}$ corresponding to c". A larger c" and a larger s indicate a higher passing sequence position of a corresponding vehicle.

Generally, the rule information of the road junction may be configured and stored in a junction passage management module in the vehicle control apparatus. The junction passage management module may determine, based on the road junction and actual vehicle passage statuses on upstream and downstream roads of the road junction, an evaluation parameter, a weight value, or a mathematical expression required for evaluating a passing sequence position of a vehicle, and determine a passing sequence of vehicles at the road junction based on the evaluation parameter, the weight value, and the determined mathematical expression. It should be understood that some or all of predefined attribute information of the road junction in embodiments of this application may also be considered as passage rule information of a junction, for example, a topological relationship.

In another example, the passage rule information of the road junction may include other information that may affect a passing sequence position of a vehicle at the road junction, for example, a rule for selecting a temporary parking space, including:

(1) selecting, as much as possible, a location in a non-working lane as the temporary parking space of the vehicle to reduce interference of the vehicle to another vehicle;
(2) ensuring that quantities of waiting vehicles on lanes are evenly distributed;
(3) not indicating, as much as possible, a vehicle to change a lane to reduce impact of temporary parking on vehicle passing and reduce interference on another vehicle; and
(4) setting, as much as possible, a temporary parking space of each vehicle based on a result of sequencing a plurality of vehicles at a road junction, so that a temporary parking space of a vehicle with a high preferential passing sequence position is located downstream of a temporary parking space of a vehicle with a low preferential passing sequence position, so that the vehicle with the high preferential passing sequence position preferentially passes through the road junction, thereby preventing a logical gridlock phenomenon.

Generally, the passage rule information of the road junction may be stored in a local database of the vehicle control apparatus, and may be obtained and used by the map module 211, the junction passage management module 212, and the path planning module 213. Alternatively, different information in the passage rule information of the road junction may be correspondingly stored in databases of the map module 211, the junction passage management module 212, and the path planning module 213, and another module may obtain and use corresponding information through access through a communication interface between modules. This is not limited in embodiments of this application. It should be understood that the foregoing description is merely an example of description of the passage rule information of the road junction in this application, but is not any limitation. In another embodiment, other passage rule information of a road junction may be further included. Details are not described herein again.

3. A vehicle reports information to a vehicle control apparatus

In an example, the vehicle may report status information of the vehicle to the vehicle control apparatus (for example, a map module), including but not limited to a location, a speed, a heading angle, and the like of the vehicle. The vehicle may directly communicate with the vehicle control apparatus, for example, report related information to the vehicle control apparatus through a Uu interface or a PC5 interface. If the vehicle control apparatus is deployed in a cloud server, the vehicle may further implement the information reporting process by using a third-party apparatus (for example, an RSU, a camera, or radio frequency identification (Radio Frequency Identification, RFID)). A specific implementation is not limited in embodiments of this application.

The status information of the vehicle may be used by the vehicle control apparatus to determine a real-time location and a real-time status of the vehicle, to determine whether the vehicle is a vehicle that needs to travel through a road junction within preset time. For example, the location of the vehicle may be used to match the vehicle with the road junction and upstream and downstream roads of the road junction, to determine a matching relationship between the vehicle and the road junction. When the vehicle matches the road junction, the vehicle may be used as a candidate vehicle on which junction passage management may need to be performed at the road junction. The heading angle of the vehicle may be used to determine whether the vehicle travels in a direction toward the road junction. If the vehicle travels in the direction toward the road junction, the vehicle may be used as a candidate vehicle on which the junction passage management may need to be performed at the road junction. The speed of the vehicle may be used to determine time required for the vehicle to travel to the road junction. Shorter time indicates that the vehicle is closer to the road junction, and a sequence position in which the vehicle travels through the road junction may be prioritized. Further, the vehicle control apparatus may determine the matching relationship between the vehicle and the road junction and a passing sequence position of the vehicle at the road junction based on one or a combination of the foregoing status information reported by the vehicle. Specific implementation is described in detail below with reference to method steps. Details are not described herein.

It may be understood that the foregoing status information is merely an example for description but not any limitation. In another embodiment, the vehicle may further report other information to the vehicle control apparatus, for example, destination information. The destination information may indicate a destination of the vehicle. Further, a path planning module may plan a driving path for the vehicle based on the destination information of the vehicle. The junction passage management module 212 may further determine the matching relationship between the vehicle and the road junction and the passing sequence position of the vehicle at the road junction with reference to the driving path of the vehicle and the like. It should be noted that, in embodiments of this application, an upper-layer application may also deliver a vehicle task to the path planning module 213, and the path planning module 213 may also perform path planning for the vehicle based on the vehicle task. This is not limited in embodiments of this application.

4. A vehicle control apparatus indicates a vehicle to pass through a road junction

In embodiments of this application, the vehicle control apparatus may indicate the vehicle to pass through the road junction in a plurality of implementations.

In an example, the junction passage management module 212 in the vehicle control apparatus may send first indication information to the vehicle. The first indication information may indicate a passing sequence position of the vehicle at the road junction. Correspondingly, the vehicle may travel in sequence based on the first indication information to pass through the road junction.

In an example, the path planning module 213 in the vehicle control apparatus may send first indication information to the vehicle. The first indication information may indicate a first path, and the first path includes the road junction. Correspondingly, the vehicle may travel based on the first path to pass through the road junction.

In an example, the junction passage management module 212 or the path planning module 213 in the vehicle control apparatus may send first indication information to the vehicle. The first indication information may indicate a temporary parking space for the vehicle before the vehicle passes through the road junction. The path planning module may send second indication information to the vehicle. The second indication information may indicate a passing path of the vehicle at the road junction, so that the vehicle travels from the temporary parking space to pass through the road junction.

**For ease of understanding, the following describes a vehicle control method in this application with reference to a method flowchart shown in FIG. 5.**

Refer to FIG. 5. The vehicle control method may include the following steps.

S510: A vehicle control apparatus obtains a topological relationship of a road junction.

In this embodiment of this application, the road junction may be a road junction that is in a target zone and on which vehicle passage management needs to be performed, and the road junction may be one or more of a plurality of road junctions in the target zone. In this specification, for ease of description, a vehicle control solution in this application is described by using one road junction as an example. It should be understood that, in an actual application, the vehicle control apparatus may alternatively simultaneously manage passing of vehicles at at least two or more road junctions in the target zone based on a vehicle control manner that is the same as or similar to that in this case. Optionally, when the vehicle control apparatus needs to manage passing of vehicles at two or more road junctions, the vehicle control apparatus may alternatively preferentially manage passing of a vehicle at a road junction with a higher management priority based on management priorities of the road junctions (where the management priorities of the road junctions may be used as a piece of attribute information of the road junctions, and are recorded in the foregoing Table 1), to reduce control difficulty and complexity. For example, a management priority of an upstream road used to go straight at the road junction may be higher than a management priority of an upstream road used to turn at the road junction. Details are not described herein again.

The topological relationship may indicate a road associated with the road junction. When S510 is implemented, the vehicle control apparatus may obtain the topological relationship of the road junction from the road network structure diagram shown in FIG. 1a. Alternatively, the vehicle control apparatus may obtain an identifier set of an upstream road and/or an identifier set of a downstream road of the road junction from the related attribute information of the road junction shown in Table 1, to obtain the topological relationship of the road junction. This is not limited in embodiments of this application.

S520: The vehicle control apparatus determines a passing sequence position of a target vehicle at the road junction based on attribute information of the road junction, status information of the target vehicle, and the topological relationship, where the target vehicle is located on an upstream road of the road junction.

In a possible implementation, the target vehicle may be a vehicle that is to pass through the road junction within preset time. Before or when S520 is implemented, the vehicle control apparatus may determine the target vehicle.

In an example, the vehicle control apparatus may obtain path planning information of a vehicle in the target zone, and determine, based on the path planning information, a plurality of vehicles that need to pass through the road junction. The vehicle control apparatus may obtain status information of the plurality of vehicles, and determine, based on the status information of the plurality of vehicles, for example, at least one of a location, a speed, and a heading angle, vehicles that are to pass through the road junction within the preset time. The target vehicle may be a vehicle in the vehicles.

In another example, the topological relationship may indicate at least one upstream road associated with the road junction. The vehicle control apparatus may determine, based on the topological relationship and from a vehicle located on the at least one upstream road, at least one vehicle that is to pass through the road junction within the preset time. The target vehicle is a vehicle in the at least one vehicle. A matching process of the vehicle and the road junction and the at least one upstream road of the road junction is described in detail below. Details are not described herein.

For example, the attribute information of the road junction may include one or more items in the foregoing Table 1. The status information of the target vehicle may include, for example, at least one of the following: a location, a speed, and a heading angle. When implementing S520 to determine the passing sequence position of the target vehicle at the road junction, the vehicle control apparatus may arrange, based on a combination of related attribute information and related status information, a passing sequence, at the road junction, of a plurality of vehicles that are located on at least one upstream road of the road junction and that are to pass through the road junction within the preset time, to determine the passing sequence position of the target vehicle at the road junction. As an example, the combination of the related attribute information and the related state information may include any one of the following:

(1) a right of way of an upstream road, a right of way of a downstream road, and a location and a speed of a vehicle;
(2) a right of way of an upstream road, a right of way of a downstream road, a capacity of the road junction, and a location and a speed of a vehicle;
(3) a right of way of an upstream road, a right of way of a downstream road, and a location, a speed, and a heading angle of a vehicle; and
(4) a right of way of an upstream road, a right of way of a downstream road, a capacity of the road junction, and a location, a speed, and a heading angle of a vehicle.

Optionally, the vehicle control apparatus may evaluate, based on any one of the foregoing information combinations and by using one of the foregoing mathematical expressions (1) to (6), each vehicle that is to pass through the road junction, and determine a passing sequence position of each vehicle at the road junction based on an evaluation result, to obtain the passing sequence position of the target vehicle at the road junction. It may be understood that when evaluating each vehicle by using the foregoing expression, the vehicle control apparatus may further obtain a preconfigured weight of at least one evaluation parameter, for example, a time weight, a right of way weight, a task priority weight, or a capacity weight of a downstream road, and substitute the weight of the at least one evaluation parameter into a corresponding expression, to obtain an evaluation result of each vehicle.

It should be noted that, when the passing sequence position of each vehicle at the road junction is determined based on the evaluation result, a plurality of vehicles that are to pass through the road junction may be arranged into at least one queue based on a capacity of the road junction (for example, a quantity n of vehicles that are allowed to pass simultaneously, where n is an integer greater than or equal to 1). A quantity of queues is equal to the capacity of the road junction, a queuing sequence position of at least one vehicle in each queue in the queue to which the vehicle belongs is a passing sequence position of the vehicle in a corresponding lane at the road junction.

In a possible implementation, the vehicle may alternatively have a task priority. When sequencing the plurality of vehicles that are to pass through the road junction within the preset time, the vehicle control apparatus may alternatively determine or adjust the passing sequence position of the target vehicle with reference to a task priority of the target vehicle. For example, passage rule information of the road junction may further include: preferentially allowing a vehicle with a high task priority to pass through the road junction.

When the vehicle control apparatus determines the passing sequence position of the target vehicle with reference to the task priority of the vehicle, the task priority of the vehicle may be used as a type of status information of the target vehicle, to participate in any combination of the related attribute and the status information, and is used to determine the passing sequence position of the target vehicle at the road junction. The task priority of the target vehicle may be carried in a vehicle task delivered by an upper-layer application, or the task priority of the target vehicle may be determined by the vehicle control apparatus based on a vehicle type of the target vehicle. For example, a task priority of a special operation vehicle (for example, an engineering emergency vehicle or an ambulance vehicle) is higher than a task priority of a common vehicle (for example, a privately owned vehicle, an operation bus, or a truck). After the passing sequence position of the target vehicle at the road junction is determined, if it is determined that the target vehicle is a vehicle belonging to the foregoing special operation vehicle, and the task priority is higher than that of another vehicle, the vehicle control apparatus may further adjust the passing sequence position of the target vehicle at the road junction forward based on the higher task priority of the target vehicle, so that the special operation vehicle can preferentially pass through the road junction. Similarly, after the passing sequence position of the target vehicle at the road junction is determined, if it is determined that the task priority of the target vehicle is lower than the task priority of the another vehicle, the vehicle control apparatus may alternatively adjust passing of the target vehicle at the road junction backward based on the lower priority of the target vehicle, so that the vehicle with the lower task priority passes through the road junction later, and another vehicle with a higher task priority preferentially passes through the road junction.

In a possible implementation, a target road for a vehicle in the downstream of the road junction may further have a related passing constraint, to restrict the target vehicle from travelling into the target road, thereby affecting passing of the target vehicle at the road junction. Therefore, the vehicle control apparatus may alternatively determine or adjust the passing sequence position of the target vehicle at the road junction with reference to, for example, attribute information of a target road for the target vehicle. For example, the passage rule information of the road junction may further include: preferentially allowing a vehicle to travel into a corresponding passable target road to pass through the road junction. For example, the attribute information of the target road may include a capacity of the target road, namely, a maximum value of vehicles that are allowed to travel into the target road.

When the vehicle control apparatus determines the passing sequence position of the target vehicle with reference to the attribute information of the target road, the attribute information of the target road may be used as a type of attribute information of the road junction, to participate in any combination of the foregoing related attribute and status information, and is used to determine the passing sequence position of the target vehicle at the road junction. After the vehicle control apparatus has determined the passing sequence position of the target vehicle at the road junction and before the target vehicle travels to the road junction, if the vehicle control apparatus determines that the target vehicle cannot travel into the target road temporarily because a related attribute of the target road for the target vehicle changes, the vehicle control apparatus may adjust the passing sequence position of the target vehicle at the road junction based on the attribute information of the target road, for example, adjust the passing sequence position of the target vehicle backward, so that another vehicle preferentially passes.

S530: The vehicle control apparatus indicates, based on the passing sequence position, passing of the target vehicle at the road junction. Correspondingly, S540: The target vehicle passes through the road junction based on an indication of the vehicle control apparatus.

In a possible implementation, in S530, the vehicle control apparatus may send, for example, indication information to the target vehicle, to indicate passing of the target vehicle at the road junction. Correspondingly, in S540, the target vehicle may travel through the road junction based on the indication information.

For example, the indication information may indicate, for example, the passing sequence position of the target vehicle at the road j unction. Correspondingly, the vehicle may travel through the road junction based on the indication information and in the corresponding passing sequence position. Alternatively, the indication information may indicate, for example, a passing path of the target vehicle at the road junction, and the passing path includes the road junction. Correspondingly, the target vehicle may travel based on the passing path and pass through the road junction.

Optionally, if the target vehicle cannot directly travel through the road junction, the vehicle control apparatus may alternatively allocate, for example, a temporary parking space to the target vehicle. The temporary parking space is a temporary parking location for the target vehicle before the target vehicle travels through the road junction. The vehicle control apparatus first indicates the target vehicle to travel to the temporary parking space, and then, indicates the target vehicle to travel from the temporary parking space to pass through the road junction. Alternatively, the vehicle control apparatus may indicate the temporary parking space and stay duration of the target vehicle in the temporary parking space (namely, a maximum value of time during which the target vehicle is allowed to stay in the temporary parking space). When stay time of the target vehicle in the temporary parking space reaches the stay duration, the target vehicle may travel from the temporary parking space to pass through the road junction.

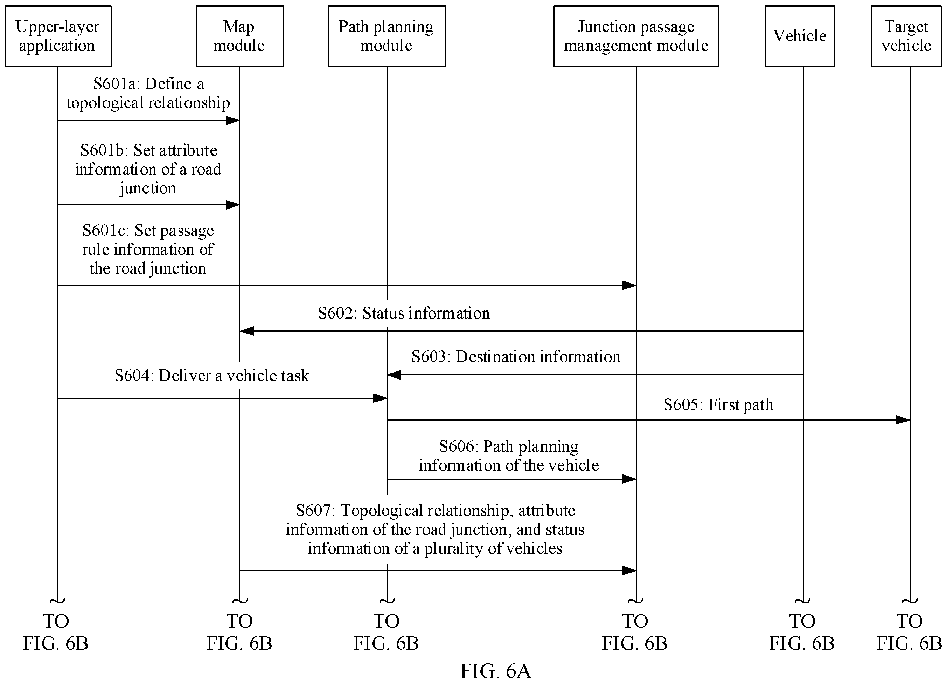

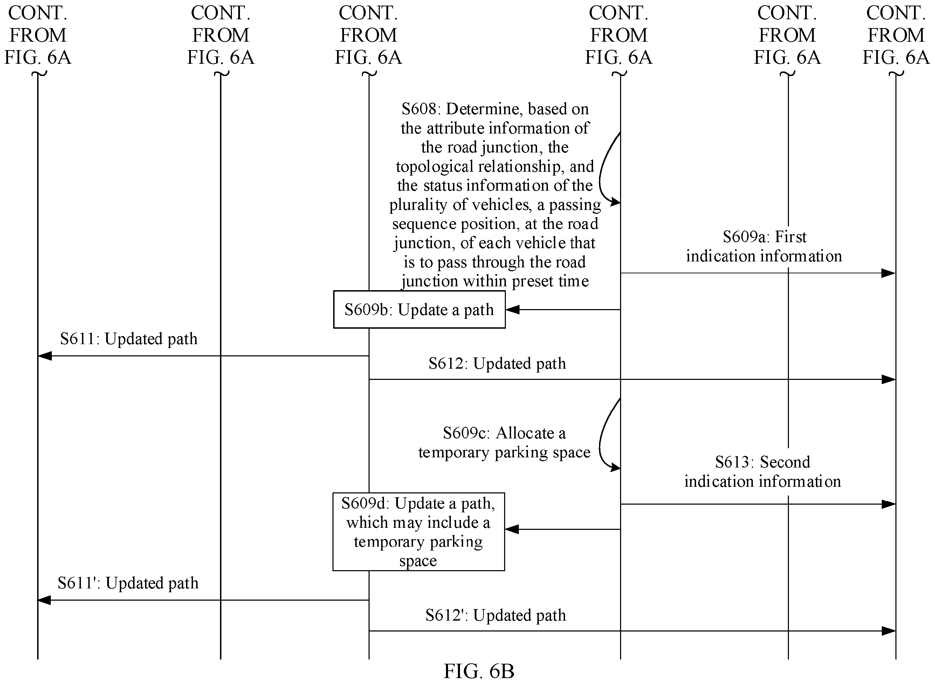

The following describes detailed implementation details of the vehicle control method in this application with reference to a method flowchart shown in FIG. 6A and FIG. 6B.

Refer to FIG. 6A and FIG. 6B. The vehicle control method may include the following steps.

S601: An upper-layer application configures a vehicle control apparatus, which includes but is not limited to: defining a topological relationship, setting attribute information of a road junction, setting passage rule information of the road junction, and the like. The upper-layer application may complete unified configuration of the information by using one configuration operation, or may implement configuration of different information in different configuration operations, or may implement configuration of different modules in the vehicle control apparatus by using different signaling. An implementation of this specific configuration process is not limited in embodiments of this application.

For example, during implementation, S601 may include the following steps.

S601a: Define the topological relationship.

S601b: Set the attribute information of the road junction, including a right of way of an upstream road, a right of way of a downstream road, a capacity of the downstream road, and the like. For details, refer to each item of the attribute information in Table 1.

S601c: Set the passage rule information of the road junction, where for example, the information may include the at least one evaluation parameter, the weight value of the evaluation parameter, the mathematical expression, and the like.

S602: A vehicle in a target zone reports status information of the vehicle to the vehicle control apparatus (which may be specifically, for example, a map module in the vehicle control apparatus), where the status information may include at least one of the following types of information: a location, a speed, and a navigation angle.

The location information reported by the vehicle may be used to locate a current location of the vehicle, and may be used to determine a road junction that matches the vehicle. The speed information reported by the vehicle may be used to estimate time required for the vehicle to travel to the road junction. The heading angle reported by the vehicle may be used to determine a traveling direction of the vehicle, and determine whether the vehicle travels to the road junction. The road junction that matches the vehicle may be more accurately determined based on the current location and the heading angle of the vehicle. The time required for the vehicle to travel to the road junction may be more accurately determined based on the speed and the heading angle of the vehicle. Time required for the vehicle to travel from the current location to the road junction may be more accurately determined based on the current location, the speed, and the heading angle of the vehicle.

It may be understood that, in this embodiment of this application, any vehicle in the target zone may report related status information of the vehicle to the vehicle control apparatus or a related module of the vehicle control apparatus in real time or periodically, so that the vehicle control apparatus or the related module of the vehicle control apparatus makes a junction passage management decision with reference to the related status information. An execution sequence of S602 is not limited in embodiments of this application.

S603: The vehicle in the target zone reports destination information of the vehicle to the vehicle control apparatus (which may be specifically, for example, a path planning module in the vehicle control apparatus), where the destination information may indicate a destination of the target vehicle. It may be understood that, in this embodiment of this application, any vehicle in the target zone may report destination information of the vehicle to the vehicle control apparatus or a related module of the vehicle control apparatus when necessary, for example, the vehicle is a vehicle in a manual driving mode or a partially autonomous driving mode, so that the path planning module performs path planning for the vehicle or adjusts a planned path of the vehicle with reference to the destination information reported by the vehicle. An execution sequence of S603 is not limited in embodiments of this application.

S604: An operator may deliver a vehicle task to the path planning module in the vehicle control apparatus 210 based on related information displayed in a user interface of the upper-layer application, where the vehicle task may be a job task, and is used to indicate a vehicle to perform a related operation; or the vehicle task may be a navigation task, and is used to indicate a vehicle to go to a corresponding destination.

If the vehicle task is a task for specifying a destination of a vehicle, the vehicle task needs to carry information indicating the destination, for example, a parking space identifier and destination address information, so that the path planning module may plan a path for the vehicle based on the destination. If the vehicle task does not specify a destination of a vehicle, the path planning module may query a corresponding matched working location for the vehicle based on a task type, and plan a path for the vehicle. If the vehicle has a task priority, the task priority of the vehicle may be carried in the vehicle task and delivered to the vehicle control apparatus, or the vehicle control apparatus may determine the task priority of the vehicle based on information such as a vehicle type.

It should be noted that, in this embodiment of this application, S602 to S604 only indicate that the vehicle control solution may include a step of reporting the status information by the vehicle, or reporting the destination information by the vehicle, or delivering the vehicle task by the upper-layer application, and do not limit an execution sequence of the steps. During specific implementation, the vehicle may report only the status information but do not report the destination information, and the destination information of the vehicle may be included in the vehicle task delivered by the upper-layer application. Alternatively, the vehicle may report the status information and the destination information of the vehicle by using the same signaling. The related information reported by the vehicle may alternatively be reported to another module in the vehicle control apparatus. In different embodiments, specific sequences of steps of reporting information by the vehicle may be different. Details are not described herein again.

In the following steps, the status information and/or the destination information reported by the vehicle may be used as information for describing an actual situation of the vehicle, and are provided to a related module of the vehicle control apparatus, for example, the map module, a junction passage management module, or the path planning module, so that the vehicle control apparatus and each module of the vehicle control apparatus may flexibly perform junction passage management on a target vehicle in a plurality of vehicles based on status information and/or destination information of the plurality of vehicles, to reduce congestion in a local zone, a long-time waiting problem of some vehicles, a circling problem, or the like due to inappropriate cooperative control on the plurality of vehicles, so as to ensure smooth passage in a local zone in a road network structure, and further ensure smooth passage in an entire zone of the road network structure. Optionally, when the vehicle control apparatus periodically performs junction passage management, the vehicle periodically reports the status information, and the vehicle periodically reports the destination information, a periodicity of reporting the status information by the vehicle or a periodicity of reporting the destination information by the vehicle may be less than or equal to a periodicity of performing junction passage management by the vehicle control apparatus 210.

S605: The path planning module performs path planning based on the vehicle task, and sends a first path to the target vehicle, where the first path may indicate a running route of the target vehicle, and correspondingly, the target vehicle may start from a current location and travel based on the first path, where the current location of the target vehicle is a location of the target vehicle when the upper-layer application triggers the vehicle task, and the current location of the target vehicle may be actively reported by the target vehicle (for example, in S602), or may be reported by the target vehicle (for example, in S602) after the vehicle control apparatus 210 delivers query information to the target vehicle (not shown in the figure) before the vehicle task needs to be delivered. In S605, the path planning module may perform path planning for the target vehicle based on the current location of the target vehicle, to obtain a subsequent moving route of the target vehicle. It may be understood that the vehicle in the manual driving mode may also report a planned path of the vehicle to the path planning module. This is not limited in embodiments of this application.

S606: The junction passage management module queries the path planning module for path information planned for the vehicle in S605, and determines, based on the path information, a set of vehicles that are to pass through the road junction within preset time, where the set of vehicles may include the target vehicle in S605.

S607: The junction passage management module queries the map module for the attribute information of the road junction, the topological relationship, and the status information of the plurality of vehicles. When the set of vehicles is determined in S606, the plurality of vehicles in S607 herein may be vehicles in the set of vehicles.

S608: The junction passage management module determines, based on the attribute information of the road junction, the topological relationship, and the status information of the plurality of vehicles, a passing sequence position, at the road junction, of each vehicle that is to pass through the road junction within the preset time.

S609: The vehicle control apparatus indicates, based on the passing sequence position, passing of the target vehicle at the road junction.

Case 1: S609a: The junction passage management module sends first indication information to the target vehicle, where the first indication information may indicate a passing sequence position of the target vehicle at the road junction, and correspondingly, the target vehicle may travel through the road junction based on the first indication information.

Case 2: S609b: The path planning module obtains a passing sequence position of the target vehicle at the road junction from the junction passage management module. S610: The path planning module may update a path of the target vehicle based on the passing sequence position of the target vehicle at the road junction. S611: The path planning module uploads the updated path of the target vehicle to the upper-layer application. Further, the operator may view the running route of the target vehicle on the user interface of the upper-layer application. S612: The path planning module delivers the updated path of the target vehicle to the target vehicle. Further, the target vehicle may travel based on the updated path to pass through the road junction.

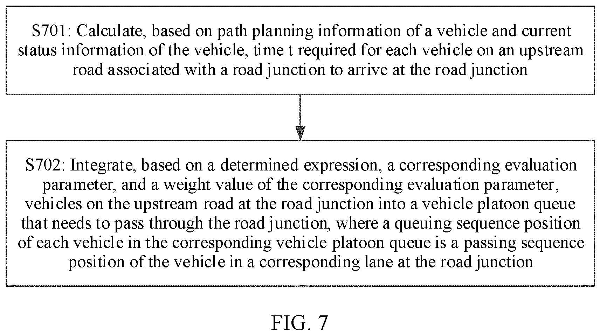

During specific implementation, for example, refer to FIG. 7. S608 may include the following steps.

S701: Calculate, based on path planning information of a vehicle and current status information of the vehicle, time t required for each vehicle on an upstream road associated with the road junction to arrive at the road junction.

For example, a road junction is associated with two upstream roads A and B, and time points at which vehicles on the two upstream roads arrive at the road junction are separately sequenced, and sequencing results are respectively $\{A_0, A_1, ..., A_m\}$ and $\{B_0, B_1, ..., B_n\}$, where m represents a quantity of vehicles on the upstream road A, n represents a quantity of vehicles on the upstream road B, and m and n are integers greater than or equal to 0.

S702: Integrate, based on a determined expression, a corresponding evaluation parameter, and a weight value of the corresponding evaluation parameter, the vehicles on the upstream road at the road junction into a vehicle platoon queue that needs to pass through the road junction, where a queuing sequence position of each vehicle in the corresponding vehicle platoon queue is a passing sequence position of the vehicle in a corresponding lane at the road junction.

The two upstream roads and a capacity of 1 of the road junction in S701 are used as an example, and vehicles in parking spaces on the two upstream roads need to be combined into one vehicle platoon queue (a quantity of vehicle platoon queues is less than or equal to the capacity of the road junction). Time required for each vehicle to arrive at the junction is t, a right of way of an upstream road and a right of way of a downstream road of the road junction that the vehicle needs to pass are respectively $r_{in}$ and $r_{out}$, a task priority of the vehicle is p, and weights of the time, the right of way, and the task priority are respectively $k_t$, $k_r$, and $k_p$. Larger values of $r_{in}$, $r_{out}$, and p indicate that the vehicle has a higher passage priority. Based on these parameters, each vehicle may be evaluated by using the following expression, to obtain a corresponding evaluation result S:

$$s = -k_t \times t + k_r \times (r_{in} + r_{out}) + k_p \times p \qquad (2)$$

When the vehicle platoon is combined based on the evaluation result S of each vehicle, evaluation results S of m vehicles on the upstream road A and n vehicles on the upstream road B are compared one by one, and the m vehicles and the n vehicles are combined into one vehicle platoon queue based on a principle that a vehicle with a larger value of S is first arranged into the vehicle platoon queue. After vehicles from one party are sorted (for example, all the m vehicles are sequenced in the vehicle platoon queue), another vehicle (for example, another vehicle that is not queued in the n vehicles) is sequentially added to the vehicle platoon queue.

It may be understood that the foregoing parameters such as a capacity of a downstream target road for the target vehicle and a vehicle task priority may also be used as evaluation parameters, to determine or adjust the passing sequence position of the target vehicle at the road junction. An implementation is similar to that in FIG. 7. Details are not described herein again.

Therefore, by using the foregoing vehicle control method, passage management of a vehicle at a road junction can be implemented, and orderly passing of a vehicle platoon at the road junction can be implemented, to prevent a congestion or gridlock phenomenon caused by inappropriate planning or random movement of vehicles. Further, this solution can ensure smooth passage of the entire road network structure. This solution may be used to implement passage management of an autonomous driving vehicle and/or a manual driving vehicle at a road junction. When there is a manual driving vehicle, a driver of the manual driving vehicle needs to comply with a related control indication of the vehicle control apparatus, to reduce security mechanisms such as an emergency stop of the autonomous driving vehicle triggered by an inappropriate manual driving behavior.

In the foregoing embodiment, if the target vehicle cannot directly travel through the road junction, the vehicle control apparatus may further allocate a temporary parking space to the target apparatus, so that the target vehicle temporarily stops and waits before traveling through the road junction. In this case, the vehicle control apparatus may allocate the temporary parking space to the target vehicle based on related attribute information of the road junction, and indicate the target vehicle to first travel to the temporary parking space before the target vehicle travels through the road junction. Then, the vehicle control apparatus may indicate the target vehicle to travel from the temporary parking space to pass through the road junction.

In this case, when S609 is implemented, the following cases may be further included.

Case 3: S609c: The junction passage management module allocates, to the target vehicle, the temporary parking space for the target vehicle before the target vehicle passes through the road junction. S613: The junction passage management module sends second indication information to the target vehicle, where the second indication information indicates the temporary parking space, and correspondingly, the target vehicle first travels to the temporary parking space before traveling through the road junction. S609a: The junction passage management module sends first indication information to the target vehicle, where the first indication information may indicate a passing sequence position of the target vehicle at the road junction, and correspondingly, the target vehicle may travel from the temporary parking space to pass through the road junction based on the first indication information.

Optionally, the second indication information in S613 may indicate the temporary parking space and stay time in the temporary parking space. Correspondingly, when the stay time in the temporary parking space reaches stay duration, the target vehicle may travel from the temporary parking space to pass through the road junction.

It should be noted that only the first indication information and the second indication information is used herein to describe an example in which the indication information sent by the junction passage management module to the target vehicle may indicate information such as the passing sequence position of the target vehicle at the road junction, a passing path of the target vehicle at the road junction, the temporary parking space of the target vehicle, or the stay time of the target vehicle at the temporary parking space, and do not restrict a transmission sequence position or an information bearing manner of each piece of information. One piece of or a combination of at least two pieces of the foregoing information may be carried in same signaling or different signaling. This is not limited in embodiments of this application. In a possible design, the vehicle control apparatus (for example, a vehicle) may include a first communication unit, a first control unit, a second communication unit, and a second control unit. The first communication unit is configured to receive first indication information, where the first indication information indicates a temporary parking space. The first control unit is configured to control, based on the first indication information, the vehicle to travel to the temporary parking space. The second communication unit is configured to receive second indication information, where the second indication information indicates a passing path of the vehicle at a road junction. The second control unit is configured to control, based on the second indication information, the vehicle to travel from the temporary parking space to pass through the road junction. The first communication unit and the second communication unit may be a same communication unit, or may be different communication units. The first control unit and the second control unit may be a same control unit, or may be different control units. This is not limited in embodiments of this application.

Case 4: S609d: The path planning module queries the junction passage management module for the passing sequence position of the target vehicle at the road junction and the temporary parking space of the target vehicle. S610': The path planning module may update a path of the target vehicle based on the passing sequence position of the target vehicle at the road junction and the temporary parking space. S611': The path planning module uploads the updated path of the target vehicle to the upper-layer application. Further, the operator may view the running route of the target vehicle on the user interface of the upper-layer application. S612': The path planning module delivers the updated path of the target vehicle to the target vehicle. Further, the target vehicle may travel based on the updated path to pass through the temporary parking space and the road junction. Optionally, in S612', stay duration at the temporary parking space may be further included. When stay time in the temporary parking space reaches the stay duration, the target vehicle may travel from the temporary parking space to pass through the road junction.

In the foregoing case in which the vehicle control apparatus needs to allocate the temporary parking space to the target vehicle, for example, the foregoing case 3 and case 4, the temporary parking space is allocated at a coarse granularity, and the temporary parking space may be located in an upstream idle zone of the road junction. In this embodiment of this application, to improve vehicle control precision, an electronic fence and a capacity of the road junction may be further set. The electronic fence may be used to accurately locate a vehicle that matches the road junction. The capacity may indicate an upper limit of a quantity of vehicles that can be supported to simultaneously pass through the road junction.

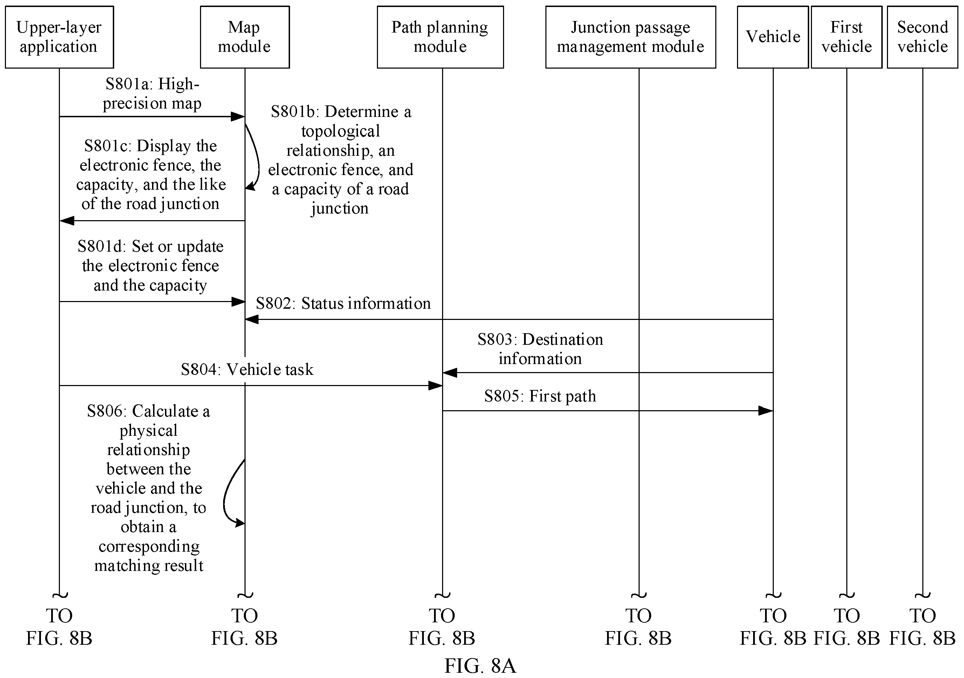

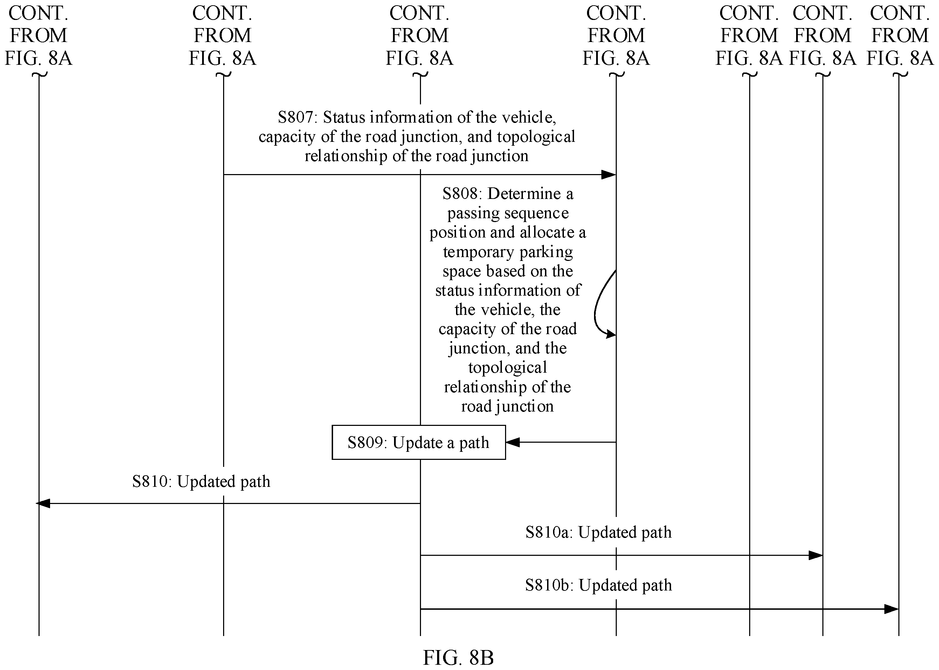

Refer to FIG. 8A and FIG. 8B. The vehicle control method may include the following steps.

S801: An upper-layer application sets a vehicle control apparatus.

Specifically, for example, S801a: Input a high-precision map to a map module in the vehicle control apparatus.

S801b: The map module determines a topological relationship, an electronic fence, and a capacity of a road junction, where the electronic fence of the road junction may be generated based on the topological relationship of the road junction.

S801c: Display, on a user interface of the upper-layer application, information such as the electronic fence and the capacity of the road junction.

S801d: An operator sets or updates the electronic fence and the capacity in the map module by using the upper-layer application.

S802: A vehicle in a target zone reports status information of the vehicle to the vehicle control apparatus (which may be specifically, for example, the map module in the vehicle control apparatus), where the status information may include at least one of the following types of information: a location, a speed, and a navigation angle.

The location information reported by the vehicle may be used to locate a current location of the vehicle, and may be used to determine a road junction that matches the vehicle. The speed information reported by the vehicle may be used to estimate time required for the vehicle to travel to the road junction. The heading angle reported by the vehicle may be used to determine a traveling direction of the vehicle, and determine whether the vehicle travels to the road junction. The road junction that matches the vehicle may be more accurately determined based on the current location and the heading angle of the vehicle. The time required for the vehicle to travel to the road junction may be more accurately determined based on the speed and the heading angle of the vehicle. Time required for the vehicle to travel from the current location to the road junction may be more accurately determined based on the current location, the speed, and the heading angle of the vehicle.

It may be understood that, in this embodiment of this application, any vehicle in the target zone may report related status information of the vehicle to the vehicle control apparatus or a related module of the vehicle control apparatus in real time or periodically, so that the vehicle control apparatus or the related module of the vehicle control apparatus makes a junction passage management decision with reference to the related status information. An execution sequence of S802 is not limited in embodiments of this application.

S803: The vehicle in the target zone reports destination information of the vehicle to the vehicle control apparatus (which may be specifically, for example, a path planning module in the vehicle control apparatus), where the destination information may indicate a destination of the target vehicle. It may be understood that, in this embodiment of this application, any vehicle in the target zone may report destination information of the vehicle to the vehicle control apparatus or a related module of the vehicle control apparatus when necessary, for example, the vehicle is a vehicle in a manual driving mode or a partially autonomous driving mode, so that the path planning module performs path planning for the vehicle or adjusts a planned path of the vehicle with reference to the destination information reported by the vehicle. An execution sequence of S803 is not limited in embodiments of this application.

S804: The operator may deliver a vehicle task to the path planning module in the vehicle control apparatus 210 based on related information displayed in the user interface of the upper-layer application, where the vehicle task may be a job task, and is used to indicate a vehicle to perform a related operation; or the vehicle task may be a navigation task, and is used to indicate a vehicle to go to a corresponding destination.

If the vehicle task is a task for specifying a destination of a vehicle, the vehicle task needs to carry information indicating the destination, for example, a parking space identifier and destination address information, so that the path planning module may plan a path for the vehicle based on the destination. If the vehicle task does not specify a destination of a vehicle, the path planning module may query a corresponding matched working location for the vehicle based on a task type, and plan a path for the vehicle. If the vehicle has a task priority, the task priority of the vehicle may be carried in the vehicle task and delivered to the vehicle control apparatus, or the vehicle control apparatus may determine the task priority of the vehicle based on information such as a vehicle type.

It should be noted that, in this embodiment of this application, S802 to S804 only indicate that the vehicle control solution may include a step of reporting the status information by the vehicle, or reporting the destination information by the vehicle, or delivering the vehicle task by the upper-layer application, and do not limit an execution sequence of the steps. During specific implementation, the vehicle may report only the status information but do not report the destination information, and the destination information of the vehicle may be included in the vehicle task delivered by the upper-layer application. Alternatively, the vehicle may report the status information and the destination information of the vehicle by using the same signaling. The related information reported by the vehicle may alternatively be reported to another module in the vehicle control apparatus. In different embodiments, specific sequences of steps of reporting information by the vehicle may be different. Details are not described herein again.

In the following steps, the status information and/or the destination information reported by the vehicle may be used as information for describing an actual situation of the vehicle, and are provided to a related module of the vehicle control apparatus, for example, the map module, a junction passage management module, or the path planning module, so that the vehicle control apparatus and each module of the vehicle control apparatus may flexibly perform junction passage management on a target vehicle in a plurality of vehicles based on status information and/or destination information of the plurality of vehicles, to reduce congestion in a local zone, a long-time waiting problem of some vehicles, a circling problem, or the like due to inappropriate cooperative control on the plurality of vehicles, so as to ensure smooth passage in a local zone in a road network structure, and further ensure smooth passage in an entire zone of the road network structure. Optionally, when the vehicle control apparatus periodically performs junction passage management, the vehicle periodically reports the status information, and the vehicle periodically reports the destination information, a periodicity of reporting the status information by the vehicle or a periodicity of reporting the destination information by the vehicle may be less than or equal to a periodicity of performing junction passage management by the vehicle control apparatus 210.

S805: The path planning module performs path planning based on the vehicle task, and sends a first path to each vehicle, where the first path may indicate a running route of the target vehicle, and correspondingly, any vehicle may start from a current location and travel based on the first path, where the current location of the vehicle is a location of the vehicle when the upper-layer application triggers the vehicle task, and the current location of the vehicle may be actively reported by the vehicle (for example, in S802), or may be reported by the vehicle (for example, in S802) after the vehicle control apparatus 210 delivers query information to the vehicle (not shown in the figure) before the vehicle task needs to be delivered. In S805, the path planning module may perform path planning for the vehicle based on the current location of the vehicle, to obtain a subsequent moving route of the vehicle. It may be understood that the vehicle in the manual driving mode may also report a planned path of the vehicle to the path planning module. This is not limited in embodiments of this application.

S806: The map module calculates a physical relationship between the vehicle and the road junction, to obtain a corresponding matching result.

In this embodiment of this application, when the vehicle control apparatus sends an accurate planned path to the vehicle, the vehicle control apparatus needs to accurately learn of a matching relationship between the vehicle and the road junction, for example, whether the vehicle is located in a road junction, or has not entered a road junction, or has moved away from a road junction. In S806, the map module may determine a matching relationship between the vehicle and a road junction based on a vehicle location.

In the matching process, attribute information such as the electronic fence of the road junction may be used. In this embodiment of this application, a range of an electronic fence of a road junction needs to cover only all connection road interfaces at the road junction. The electronic fence may partially overlap a road associated with the electronic fence, or may overlap an electronic fence of another road junction. This is not limited in embodiments of this application. Refer to FIG. 4. An inner polygon is obtained by connecting rendezvous points of a plurality of roads at a road junction, and an outer polygon is an electronic fence disposed at the road junction.

The vehicle control apparatus may perform, for each vehicle, a process of matching the vehicle and a road in S806 based on the following vehicle-road matching rule information.

(1) When a vehicle just goes online, a location reported by the vehicle is globally matched with a map of an entire target zone. Because an electronic fence of a road junction may overlap with an associated road, during global matching, the vehicle location may be first matched with a road, and when no road can be matched, the vehicle is then matched with the road junction.

(2) If a matching result of the vehicle in a previous matching process is a road, the reported location of the vehicle is matched with the road. If the reported location of the vehicle does not match the road, a downstream road junction of the road is queried, and then the reported location of the vehicle is matched with a downstream road of the road junction. If the reported location of the vehicle does not match the downstream road of the road junction, the reported location of the vehicle is matched with an electronic fence of the road junction, and a downstream search is performed according to this rule.

(3) If a matching result of the vehicle in previous matching is a road junction, the reported location of the vehicle is first matched with a downstream road of the road junction. If the reported location of the vehicle does not match the downstream road of the road junction, the reported location of the vehicle is matched with an electronic fence of the road junction, and a downstream search is performed according to this rule.

(4) If the vehicle travels along a reverse direction of an allowed passing direction of a road, when the vehicle cannot be matched in a downstream search, appropriate upstream searching may be performed based on an interval between a current matching process and a previous matching process and a vehicle speed.

Because a road junction is associated with a large quantity of upstream/downstream roads and may overlap with a road, generally, after matching a vehicle to a road junction based on a location reported by the vehicle, the vehicle control apparatus does not need to continue to perform downstream matching. There is also no need to determine a road or lane on which the vehicle is specifically located at the road junction.

S807: The junction passage management module queries the map module for the status information of the vehicle, the capacity of the road junction, and the topological relationship of the road junction.

S808: The junction passage management module determines, based on the status information of the vehicle, the capacity of the road junction, and the topological relationship of the road junction, a set of vehicles that are to pass through the road junction within preset time, determines a first vehicle that can directly drive through the road junction and a second vehicle that cannot directly drive through the road junction in the set of vehicles, and allocates a temporary parking space to the second vehicle at the same time.

The junction passage management module may determine, based on the foregoing method, a passing sequence position, at the road junction, of each vehicle in the set of vehicles. Based on the passing sequence position, the junction passage management module may determine, for example, that a vehicle with a higher passing sequence position is the first vehicle that can directly drive through the road junction, and a vehicle with a lower passing sequence position is the second vehicle that cannot directly drive through the road junction. Alternatively, the junction passage management module may determine the first vehicle and the second vehicle based on the capacity of the road junction and an overlapping status of roads or lanes in the road junction, so that a vehicle with a lower passing sequence position is the second vehicle that cannot directly pass.

For example, in this embodiment of this application, the following two manners may be used to limit a passing volume at the road junction.

(1) Capacity of the road junction. The capacity refers to a maximum quantity of vehicles that can pass through the road junction at the same time. Generally, at some road junctions with small sizes and a small quantity of associated upstream/downstream roads, gridlock or congestion phenomena may be reduced by limiting a capacity (for example, 2) of the road junction.

(2) Lane interleaving status at the road junction. The lane interleaving status may be a lane intersection status, at the road junction, of an upstream road and a downstream road of the road junction. It may be determined, by determining the lane interleaving status, whether two or more vehicles can be supported to pass through the road junction at the same time. If the two or more vehicles cannot be supported to pass at the same time, a vehicle with a lower passing sequence position needs to be temporarily stopped to wait, or a passing sequence position of the vehicle needs to be adjusted backward. The lane interleaving status at the road junction may be obtained through real-time calculation by the map module, or may be recorded in Table 1 as a piece of attribute information of the road junction, and may be queried by the map module or the junction passage management module.

For example, a first vehicle with a higher passing sequence position and a second vehicle with a lower passing sequence position may be determined in proportion based on a total quantity of vehicles included in a vehicle platoon queue. For example, vehicles with the first 70% of the passing sequence positions may be used as first vehicles with higher passing sequence positions, and vehicles with the last 30% of the passing sequence positions may be used as second vehicles with lower passing sequence positions.

The junction passage management module may allocate temporary parking spaces to the second vehicles based on the foregoing rule for selecting a temporary parking space, and temporarily park the second vehicles on a non-working lane as much as possible, so that the second vehicles are evenly distributed on each lane, and interference to an entire system is the lowest.

S809: The path planning module queries the junction passage management module for the passing sequence position of each vehicle in the set of vehicles and the temporary parking space of the second vehicle, and updates a path of each vehicle based on information obtained through query, where an updated path of the first vehicle may include the road junction, and an updated path of the second vehicle may include a corresponding temporary parking space and the road junction.

S810: The path planning module uploads the updated path of each vehicle to the upper-layer application. Further, the operator may view the running route of the vehicle on the user interface of the upper-layer application. S811a: The path planning module may deliver the updated path of the first vehicle to the first vehicle. Further, the first vehicle may travel based on the updated path to pass through the road junction. S811b: The path planning module may deliver the updated path of the second vehicle to the second vehicle. Further, the second vehicle may travel to the corresponding temporary parking space based on the updated path, and then travel from the temporary parking space to pass through the road junction.

Therefore, according to the vehicle control method shown in FIG. 8A and FIG. 8B, a real-time location of a vehicle is matched with a road junction, to better implement passage management on the vehicle at the road junction. This helps further reduce a probability that gridlock or congestion occurs at the road junction, and ensures smoothness of an entire road network system. This solution mainly depends on calculation and processing of a vehicle control apparatus, has a low requirement on calculation and processing of a vehicle, and is more applicable to an autonomous driving scenario.

Based on a same technical concept, an embodiment of this application further provides a vehicle control apparatus, configured to perform the method performed by the vehicle control apparatus in the foregoing embodiments. For related features, refer to the foregoing method embodiments. Details are not described herein again.

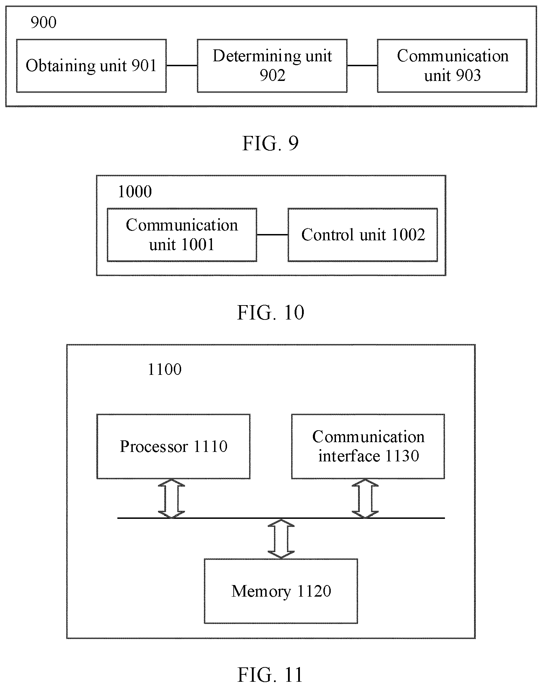

As shown in FIG. 9, the vehicle control apparatus 900 may include: an obtaining unit 901, configured to obtain a topological relationship of a road junction, where the topological relationship indicates a road associated with the road junction; a determining unit 902, configured to determine a passing sequence position of a target vehicle at the road junction based on attribute information of the road junction, status information of the target vehicle, and the topological relationship, where the target vehicle is located on an upstream road of the road junction; and a communication unit 903, configured to indicate, based on the passing sequence position, passing of the target vehicle at the road junction.

Optionally, the determining unit is further configured to determine the target vehicle, where the target vehicle is a vehicle that is to pass through the road junction within preset time.

Optionally, the topological relationship indicates at least one upstream road associated with the road junction. The determining unit is further configured to determine, based on the topological relationship and from a vehicle located on the at least one upstream road, at least one vehicle that is to pass through the road junction within the preset time, where the target vehicle is a vehicle in the at least one vehicle.

Optionally, the topological relationship indicates at least one downstream road associated with the road junction. The determining unit is further configured to: determine a target road for the target vehicle from the at least one downstream road, and adjust the passing sequence position of the target vehicle at the road junction based on attribute information of the target road.

Optionally, the topological relationship indicates at least one downstream road associated with the road junction. The determining unit is further configured to: determine a target road for the target vehicle from the at least one downstream road. That the determining unit determines the passing sequence position of the target vehicle at the road junction includes: determining the passing sequence position of the target vehicle at the road junction based on the attribute information of the target road.

Optionally, the apparatus further includes: an adjustment unit, configured to adjust the passing sequence position of the target vehicle at the road junction based on a task priority of the target vehicle.

Optionally, that the determining unit determines the passing sequence position of the target vehicle at the road junction includes: determining the passing sequence position of the target vehicle at the target junction based on the task priority of the target vehicle.

Optionally, the communication unit is configured to send indication information to the target vehicle, where the indication information indicates a temporary parking space for the target vehicle before the target vehicle passes through the road junction.

An embodiment of this application further provides a vehicle control apparatus, configured to perform the method performed by the vehicle in the foregoing method embodiments. For related features, refer to the foregoing method embodiments. Details are not described herein again.

As shown in FIG. 10, in an example, the vehicle control apparatus 1000 may include: a communication unit 1001, configured to receive first indication information, where a vehicle is located on an upstream road of a road junction, the road junction and the upstream road of the road junction are defined in a same topological relationship, and the first indication information indicates a passing sequence position of the vehicle at the road junction; and a control unit 1002, configured to control, based on the first indication information, the vehicle to travel through the road junction.

Optionally, the communication unit is further configured to receive second indication information, where the second indication information indicates a temporary parking space for the target vehicle before the target vehicle passes through the road junction. The control unit is further configured to: before controlling the vehicle to pass through the road junction, control, based on the second indication information, the vehicle to travel to the temporary parking space.

In another example, the communication unit 1001 may include a first communication unit and a second communication unit. The first communication unit is configured to receive first indication information, where the first indication information indicates a temporary parking space. The control unit 1002 includes a first control unit and a second control unit. The first control unit is configured to control, based on the first indication information, a vehicle to travel to the temporary parking space. The second communication unit is configured to receive second indication information, where the second indication information indicates a passing path of the vehicle at a road junction. The second control unit is configured to control, based on the second indication information, the vehicle to travel from the temporary parking space to pass through the road junction. It should be understood that, in this embodiment of this application, the first communication unit and the second communication unit may be the same or may be different, and the first control unit and the second control unit may be the same or may be different.

In another example, the communication unit 1001 is configured to receive indication information, where the indication information indicates a passing path, and the passing path includes a temporary parking space and a road junction. The control unit 1002 is configured to control, based on the indication information, a vehicle to travel through the road junction after the vehicle stops at the temporary parking space.

It should be noted that, in this embodiment of this application, division into units is an example, and is merely logical function division. In actual implementation, another division manner may be used. Function units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, or a network device) or a processor (processor) to perform all or some of the steps of the methods described in embodiments of this application. The storage medium includes any medium that can store program code, like a USB flash drive, a removable hard disk, a read-only memory (ROM, Read-Only Memory), a random access memory (RAM, Random Access Memory), a magnetic disk, or an optical disc.

In a simple embodiment, a person skilled in the art may figure out that the vehicle control apparatus or the vehicle in the foregoing embodiments may be formed as shown in FIG. 11.

An apparatus 1100 shown in FIG. 11 includes at least one processor 1110 and a memory 1120, and optionally, may further include a communication interface 1130.

The memory 1120 may be a volatile memory, for example, a random access memory. Alternatively, the memory may be a non-volatile memory, for example, a read-only memory, a flash memory, a hard disk drive (hard disk drive, HDD), or a solid-state drive (solid-state drive, SSD). Alternatively, the memory 1120 is any other medium that can be used to carry or store expected program code in a command or data structure form and that can be accessed by a computer. However, this is not limited thereto. The memory 1120 may be a combination of the foregoing memories.

In this embodiment of this application, a specific connection medium between the processor 1110 and the memory 1120 is not limited.

The apparatus shown in FIG. 11 further includes the communication interface 1130, and when communicating with another device, the processor 1110 may perform data transmission through the communication interface 1130.

When a vehicle control apparatus is formed as shown in FIG. 11, the processor 1110 in FIG. 11 may invoke computer executable instructions stored in the memory 1120, so that the device 1100 can perform the method performed by the vehicle control apparatus in any one of the foregoing method embodiments.

When a vehicle is formed as shown in FIG. 11, the processor 1110 in FIG. 11 may invoke computer executable instructions stored in the memory 1120, so that the device 1100 can perform the method performed by the vehicle in any one of the foregoing method embodiments.

An embodiment of this application further relates to a chip system. The chip system includes a processor, configured to invoke a computer program or computer instructions stored in a memory, so that the processor performs the method in any one of embodiments shown in FIG. 5 to FIG. 8B.

In a possible implementation, the processor is coupled to the memory through an interface.

In a possible implementation, the chip system further includes a memory, and the memory stores a computer program or computer instructions.

An embodiment of this application further relates to a processor. The processor is configured to invoke a computer program or computer instructions stored in a memory, so that the processor performs the method according to any one of embodiments in FIG. 5 to FIG. 8B.

The processor mentioned in any one of the foregoing descriptions may be a general-purpose central processing unit, a microprocessor, an application-specific integrated circuit (application-specific integrated circuit, ASIC), or one or more integrated circuits configured to control program execution of the driving scenario recognition method in the embodiment shown in FIG. 5. The memory mentioned in any one of the foregoing descriptions may be a read-only memory (read-only memory, ROM), another type of static storage device that can store static information and instructions, a random access memory (random access memory, RAM), or the like.

It should be understood that embodiments of this application may be provided as a method, a system, or a computer program product. Therefore, this application may use a form of a hardware-only embodiment, a software-only embodiment, or an embodiment with a combination of software and hardware. Moreover, this application may use a form of a computer program product that is implemented on one or more computer-usable storage media (including but not limited to a disk memory, a CD-ROM, an optical memory, and the like) that include computer-usable program code.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to embodiments of this application without departing from the scope of embodiments of this application. In this way, this application is intended to cover these modifications and variations of embodiments of this application provided that they fall within the scope of protection defined by the following claims and their equivalent technologies.

**Claims**

1. A vehicle control method, wherein the method comprises:

   obtaining a topological relationship of a road junction, wherein the topological relationship indicates a road associated with the road junction;
   determining a passing sequence position of a target vehicle at the road junction based on attribute information of the road junction, status information of the target vehicle, and the topological relationship, wherein the target vehicle is located on an upstream road of the road junction; and
indicating, based on the passing sequence position, passing of the target vehicle at the road junction.

2. The method according to claim 1, wherein the method further comprises:
determining the target vehicle, wherein the target vehicle is a vehicle that is to pass through the road junction within preset time.

3. The method according to claim 1 or 2, wherein the topological relationship indicates at least one upstream road associated with the road junction, and the method further comprises:
determining, based on the topological relationship and from a vehicle located on the at least one upstream road, at least one vehicle that is to pass through the road junction within the preset time, wherein the target vehicle is a vehicle in the at least one vehicle.

4. The method according to any one of claims 1 to 3, wherein the topological relationship indicates at least one downstream road associated with the road junction, and the method further comprises:

   determining a target road for the target vehicle from the at least one downstream road; and
   adjusting the passing sequence position of the target vehicle at the road junction based on attribute information of the target road.

5. The method according to any one of claims 1 to 3, wherein the topological relationship indicates at least one downstream road associated with the road junction, and the method further comprises:

   determining a target road for the target vehicle from the at least one downstream road; and
   the determining a passing sequence position of a target vehicle at the road junction comprises:
   determining the passing sequence position of the target vehicle at the road junction based on attribute information of the target road.

6. The method according to claim 4 or 5, wherein the attribute information of the target road comprises a capacity of the target road.

7. The method according to any one of claims 1 to 6, wherein the method further comprises:
adjusting the passing sequence position of the target vehicle at the road junction based on a task priority of the target vehicle.

8. The method according to any one of claims 1 to 6, wherein the determining a passing sequence position of a target vehicle at the road junction comprises:
determining the passing sequence position of the target vehicle at the road junction based on a task priority of the target vehicle.

9. The method according to any one of claims 1 to 8, wherein the indicating, based on the passing sequence position, passing of the target vehicle at the road junction comprises:
sending indication information to the target vehicle, wherein the indication information indicates a temporary parking space for the target vehicle before the target vehicle passes through the road junction.

10. The method according to any one of claims 1 to 9, wherein the attribute information of the road junction comprises at least one of the following: a capacity, a right of way of the upstream road, and a right of way of the downstream road.

11. The method according to any one of claims 1 to 10, wherein the status information of the target vehicle comprises at least one of the following: a location, a speed, and a heading angle.

12. A vehicle control method, wherein the method comprises:

   receiving, by a target vehicle, first indication information, wherein the target vehicle is located on an upstream road of a road junction, the road junction and the upstream road of the road junction are defined in a same topological relationship, and the first indication information indicates a passing sequence position of the target vehicle at the road junction; and

traveling, by the target vehicle, through the road junction based on the first indication information.

13. The method according to claim 12, wherein the target vehicle is a vehicle that is to pass through the road junction within preset time.

14. The method according to claim 12 or 13, wherein the road junction is associated with at least one upstream road, the target vehicle is a vehicle in at least one vehicle that is to pass through the road junction within the preset time, and the at least one vehicle is located on the at least one upstream road.

15. The method according to any one of claims 12 to 14, wherein the method further comprises:

receiving, by the target vehicle, second indication information, wherein the second indication information indicates a temporary parking space for the target vehicle before the target vehicle passes through the road junction; and

traveling, by the target vehicle, to the temporary parking space based on the second indication information before the target vehicle passes through the road junction.

16. The method according to any one of claims 12 to 15, wherein the method further comprises:
reporting, by the target vehicle, status information, wherein the status information comprises at least one of the following: a location, a speed, and a heading angle.

17. A vehicle control method, wherein the method comprises:

receiving first indication information, wherein the first indication information indicates a temporary parking space;
controlling, based on the first indication information, a vehicle to travel to the temporary parking space;
receiving second indication information, wherein the second indication information indicates a passing path of the vehicle at a road junction; and
controlling, based on the second indication information, the vehicle to travel from the temporary parking space to pass through the road junction.

18. A vehicle control apparatus, comprising:

an obtaining unit, configured to obtain a topological relationship of a road junction, wherein the topological relationship indicates a road associated with the road junction;
a determining unit, configured to determine a passing sequence position of a target vehicle at the road junction based on attribute information of the road junction, status information of the target vehicle, and the topological relationship, wherein the target vehicle is located on an upstream road of the road junction; and
a communication unit, configured to indicate, based on the passing sequence position, passing of the target vehicle at the road junction.

19. The apparatus according to claim 18, wherein the determining unit is further configured to:
determine the target vehicle, wherein the target vehicle is a vehicle that is to pass through the road junction within preset time.

20. The apparatus according to claim 18 or 19, wherein the topological relationship indicates at least one upstream road associated with the road junction, and the determining unit is further configured to:
determine, based on the topological relationship and from a vehicle located on the at least one upstream road, at least one vehicle that is to pass through the road junction within the preset time, wherein the target vehicle is a vehicle in the at least one vehicle.

21. The apparatus according to any one of claims 18 to 20, wherein the topological relationship indicates at least one downstream road associated with the road junction, and the determining unit is further configured to:

determine a target road for the target vehicle from the at least one downstream road; and
adjust the passing sequence position of the target vehicle at the road junction based on attribute information of the target road.

22. The apparatus according to any one of claims 18 to 20, wherein the topological relationship indicates at least one downstream road associated with the road junction, and the determining unit is further configured to:

> determine a target road for the target vehicle from the at least one downstream road; and
> that the determining unit determines the passing sequence position of the target vehicle at the road junction comprises:
> determining the passing sequence position of the target vehicle at the road junction based on attribute information of the target road.

23. The apparatus according to any one of claims 18 to 22, further comprising:
an adjustment unit, configured to adjust the passing sequence position of the target vehicle at the road junction based on a task priority of the target vehicle.

24. The apparatus according to any one of claims 18 to 22, wherein that the determining unit determines the passing sequence position of the target vehicle at the road junction comprises:
determining the passing sequence position of the target vehicle at the road junction based on a task priority of the target vehicle.

25. The apparatus according to any one of claims 18 to 24, wherein the communication unit is configured to:
send indication information to the target vehicle, wherein the indication information indicates a temporary parking space for the target vehicle before the target vehicle passes through the road junction.

26. A vehicle control apparatus, comprising:

> a communication unit, configured to receive first indication information, wherein a vehicle is located on an upstream road of a road junction, the road junction and the upstream road of the road junction are defined in a same topological relationship, and the first indication information indicates a passing sequence position of the vehicle at the road junction; and
> a control unit, configured to control, based on the first indication information, the vehicle to travel through the road junction.

27. The apparatus according to claim 26, wherein

> the communication unit is further configured to receive second indication information, wherein the second indication information indicates a temporary parking space for the target vehicle before the target vehicle passes through the road junction; and
> the control unit is further configured to: before controlling the vehicle to pass through the road junction, control, based on the second indication information, the vehicle to travel to the temporary parking space.

28. A vehicle control apparatus, comprising:

> a first communication unit, configured to receive first indication information, wherein the first indication information indicates a temporary parking space;
> a first control unit, configured to control, based on the first indication information, a vehicle to travel to the temporary parking space;
> a second communication unit, configured to receive second indication information, wherein the second indication information indicates a passing path of the vehicle at a road junction; and
> a second control unit, configured to control, based on the second indication information, the vehicle to travel from the temporary parking space to pass through the road junction.

29. An apparatus, comprising a processor and a memory, wherein

> the memory is configured to store a program; and
> the processor is configured to execute the program stored in the memory, to enable the apparatus to implement the method according to any one of claims 1 to 11.

30. An apparatus, comprising a processor and a memory, wherein

> the memory is configured to store a program; and

the processor is configured to execute the program stored in the memory, to enable the apparatus to implement the method according to any one of claims 12 to 16 or the method according to claim 17.

31. A vehicle control system, comprising:

the vehicle control apparatus according to any one of claims 18 to 25, and
the vehicle control apparatus according to any one of claims 26 and 27 or according to claim 28.

32. A computer storage medium, comprising computer-readable instructions, wherein when the computer-readable instructions are executed, the method according to any one of claims 1 to 11, claims 12 to 16, or claim 17 is implemented.

33. A computer program product, comprising instructions, wherein when the instructions are run on a computer or a processor, the computer or the processor is enabled to implement the method according to any one of claims 1 to 11, claims 12 to 16, or claim 17.

34. A chip, comprising a processor, wherein the processor is configured to invoke a computer program or computer instructions stored in a memory, to implement the method according to any one of claims 1 to 11, claims 12 to 16, or claim 17.

35. A vehicle, wherein the vehicle comprises the vehicle control apparatus according to any one of claims 26 and 27, or the vehicle control apparatus according to claim 28.

FIG. 1a

FIG. 1b

FIG. 2a

FIG. 2b

FIG. 3

FIG. 4

```
┌─────────────────────┐                          ┌─────────────────────┐
│   Vehicle control   │                          │    Target vehicle   │
│     apparatus       │                          │                     │
└─────────────────────┘                          └─────────────────────┘
          │                                                  │
┌─────────────────────────┐                                  │
│ S510: Obtain a topological │                               │
│ relationship of a road junction │                          │
└─────────────────────────┘                                  │
          │                                                  │
┌─────────────────────────────┐                              │
│  S520: Determine a passing  │                              │
│ sequence position of the target │                          │
│   vehicle at the road junction  │                          │
│ based on attribute information of │                        │
│     the road junction, status    │                         │
│ information of the target vehicle, │                       │
│ and the topological relationship │                         │
└─────────────────────────────┘                              │
          │                                                  │
          │  S530: Indicate, based on the passing sequence   │
          │   position, passing of the target vehicle at the │
          │                  road junction                  ─┼──▶
          │                                                  │
          │                               ┌─────────────────────────┐
          │                               │ S540: Pass through the  │
          │                               │  road junction based on │
          │                               │   an indication of the  │
          │                               │     vehicle control     │
          │                               │       apparatus         │
          │                               └─────────────────────────┘
          │                                                  │
```

FIG. 5

EP 4 350 664 A1

| Upper-layer application | Map module | Path planning module | Junction passage management module | Vehicle | Target vehicle |
|---|---|---|---|---|---|

S601a: Define a topological relationship

S601b: Set attribute information of a road junction

S601c: Set passage rule information of the road junction

S602: Status information

S603: Destination information

S604: Deliver a vehicle task

S605: First path

S606: Path planning information of the vehicle

S607: Topological relationship, attribute information of the road junction, and status information of a plurality of vehicles

| TO FIG. 6B | TO FIG. 6B | TO FIG. 6B | TO FIG. 6B | TO FIG. 6B | TO FIG. 6B |

FIG. 6A

CONT.
FROM
FIG. 6A

CONT.
FROM
FIG. 6A

CONT.
FROM
FIG. 6A

CONT.
FROM
FIG. 6A

CONT.
FROM
FIG. 6A

CONT.
FROM
FIG. 6A

S608: Determine, based on
the attribute information of
the road junction, the
topological relationship, and
the status information of the
plurality of vehicles, a passing
sequence position, at the road
junction, of each vehicle that
is to pass through the road
junction within preset time

S609a: First
indication information

S609b: Update a path

S611: Updated path

S612: Updated path

S609c: Allocate a
temporary parking space

S613: Second
indication information

S609d: Update a path,
which may include a
temporary parking
space

S611': Updated path

S612': Updated path

FIG. 6B

EP 4 350 664 A1

S701: Calculate, based on path planning information of a vehicle and current status information of the vehicle, time t required for each vehicle on an upstream road associated with a road junction to arrive at the road junction

S702: Integrate, based on a determined expression, a corresponding evaluation parameter, and a weight value of the corresponding evaluation parameter, vehicles on the upstream road at the road junction into a vehicle platoon queue that needs to pass through the road junction, where a queuing sequence position of each vehicle in the corresponding vehicle platoon queue is a passing sequence position of the vehicle in a corresponding lane at the road junction

FIG. 7

FIG. 8A

Upper-layer application | Map module | Path planning module | Junction passage management module | Vehicle | First vehicle | Second vehicle

S801a: High-precision map

S801b: Determine a topological relationship, an electronic fence, and a capacity of a road junction

S801c: Display the electronic fence, the capacity, and the like of the road junction

S801d: Set or update the electronic fence and the capacity

S802: Status information

S803: Destination information

S804: Vehicle task

S805: First path

S806: Calculate a physical relationship between the vehicle and the road junction, to obtain a corresponding matching result

TO FIG. 8B

CONT.
FROM
FIG. 8A

CONT.
FROM
FIG. 8A

CONT.
FROM
FIG. 8A

CONT.
FROM
FIG. 8A

CONT.
FROM
FIG. 8A

CONT.
FROM
FIG. 8A

CONT.
FROM
FIG. 8A

S807: Status information of the vehicle,
capacity of the road junction, and topological
relationship of the road junction

S808: Determine a
passing sequence
position and allocate a
temporary parking
space based on the
status information of
the vehicle, the
capacity of the road
junction, and the
topological
relationship of the
road junction

S809: Update a path

S810: Updated path

S810a: Updated path

S810b: Updated path

FIG. 8B

EP 4 350 664 A1

900

| Obtaining unit 901 | Determining unit 902 | Communication unit 903 |

FIG. 9

1000

| Communication unit 1001 | Control unit 1002 |

FIG. 10

1100

| Processor 1110 | Communication interface 1130 |

Memory 1120

FIG. 11

## INTERNATIONAL SEARCH REPORT

| International application No. |
| --- |
| **PCT/CN2022/102225** |

| A. | CLASSIFICATION OF SUBJECT MATTER |
| --- | --- |

G08G 1/16(2006.01)i

According to International Patent Classification (IPC) or to both national classification and IPC

| B. | FIELDS SEARCHED |
| --- | --- |

Minimum documentation searched (classification system followed by classification symbols)

G08G1

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, IEEE: 无人车, 无人驾驶, 自动驾驶, 自主驾驶, 智慧车, 智能车, 顺序, 次序, 排序, 顺位, 交叉口, 路口, 交汇, 汇合, 停泊, 停靠, 等候, 等待, 停车, 车路, 云端, 云平台, 服务器, ranking, ordering, crossing, intersection, junction, UAV, AGV, unmanned, auto+, parking, stop+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2006350719 A (TOYOTA MOTOR CORP.) 28 December 2006 (2006-12-28) description, paragraphs [0010]-[0056] | 1-35 |
| X | JP 2006350568 A (TOYOTA MOTOR CORP.) 28 December 2006 (2006-12-28) description, paragraphs [0023]-[0057] | 1-35 |
| X | CN 109979217 A (BEIJING BAIDU NETCOM SCIENCE AND TECHNOLOGY CO., LTD.) 05 July 2019 (2019-07-05) description, paragraphs 437-518 | 1-8, 10-14, 16, 18-24, 26, 29-35 |
| X | CN 109979238 A (BEIJING BAIDU NETCOM SCIENCE AND TECHNOLOGY CO., LTD.) 05 July 2019 (2019-07-05) description, paragraphs 435-508 | 1-8, 10-14, 16, 18-24, 26, 29-35 |
| X | CN 109979239 A (BEIJING BAIDU NETCOM SCIENCE AND TECHNOLOGY CO., LTD.) 05 July 2019 (2019-07-05) description, paragraphs 411-516 | 1-8, 10-14, 16, 18-24, 26, 29-35 |
| X | JP 2007293388 A (TOYOTA MOTOR CORP.) 08 November 2007 (2007-11-08) description, paragraphs [0037]-[0056] | 1-8, 10-14, 16, 18-24, 26, 29-35 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 August 2022** | **09 September 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/102225** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 110751334 A (BLUESWORD INTELLIGENT TECHNOLOGY CO., LTD.) 04 February 2020 (2020-02-04)<br>      description, paragraphs 55-152 | 1-35 |

**INTERNATIONAL SEARCH REPORT**
Information on patent family members

International application No.

**PCT/CN2022/102225**

| Patent document cited in search report | | | Publication date (day/month/year) | Patent family member(s) | | | Publication date (day/month/year) |
|---|---|---|---|---|---|---|---|
| JP | 2006350719 | A | 28 December 2006 | JP | 4692091 | B2 | 01 June 2011 |
| JP | 2006350568 | A | 28 December 2006 | | None | | |
| CN | 109979217 | A | 05 July 2019 | US | 2019206236 | A1 | 04 July 2019 |
| | | | | CN | 113129622 | A | 16 July 2021 |
| | | | | CN | 113129623 | A | 16 July 2021 |
| | | | | CN | 113299096 | A | 24 August 2021 |
| CN | 109979238 | A | 05 July 2019 | US | 2019202476 | A1 | 04 July 2019 |
| | | | | US | 10745028 | B2 | 18 August 2020 |
| CN | 109979239 | A | 05 July 2019 | US | 2019206254 | A1 | 04 July 2019 |
| JP | 2007293388 | A | 08 November 2007 | | None | | |
| CN | 110751334 | A | 04 February 2020 | | None | | |

Form PCT/ISA/210 (patent family annex) (January 2015)

**REFERENCES CITED IN THE DESCRIPTION**

**Patent documents cited in the description**

- CN 202110736911

- CN 202111390324